# EUROPÄISCHE PATENTANMELDUNG

(11) **EP 4 321 913 A1**
(43) Veröffentlichungstag der Anmeldung: **14.02.2024**
(21) Anmeldenummer: 22190225.7
(22) Anmeldetag: 12.08.2022
(51) Int. Cl.: G02B 6/44

(54) **SCHIENENANORDNUNG, TRÄGERANORDNUNG UND FASEROPTISCHES VERTEILERSYSTEM**

(71) Anmelder: Rosenberger-OSI GmbH & Co. OHG, 86167 Augsburg (DE)
(72) Erfinder: Brücher, Luis, 13465 Berlin (DE); Hart, Jochen, 97523 Schwanfeld (DE); Heimer, Danny, 83714 Miesbach (DE); Schlomka, Sven, 81241 München (DE); Weigand, Benjamin, 86150 Augsburg (DE); Mayr, Harald, 86735 Amerdingen (DE)
(74) Vertreter: Lorenz, Matthias

(57) **Zusammenfassung**

Die Erfindung betrifft eine Schienenanordnung (3) für eine Trägereinheit (2) für eine faseroptische Komponente, insbesondere für ein Rangierfeld, aufweisend eine erste Montageschiene (8) und eine separate zweite Montageschiene (9). Die Montageschienen (8, 9) sind voneinander beabstandet und ausgebildet, die Trägereinheit (2) gemeinsam zwischeneinander aufzunehmen. Jede der Montageschienen (8, 9) weist wenigstens einen Befestigungspunkt (10) zur Befestigung an einem Verteilerrahmen (11) auf.

## Beschreibung

Die Erfindung betrifft eine Schienenanordnung für eine Trägereinheit für eine faseroptische Komponente, insbesondere für ein Rangierfeld, aufweisend eine erste Montageschiene und eine separate zweite Montageschiene.

Die Erfindung betrifft außerdem eine Trägeranordnung, aufweisend eine Trägereinheit, insbesondere ein Rangierfeld, und eine Schienenanordnung für die Trägereinheit.

Die Erfindung betrifft ferner ein faseroptisches Verteilersystem, aufweisend einen Verteilerrahmen und mehrere Trägeranordnungen.

In Rechenzentren werden mitunter Trägereinheiten, insbesondere einzelne Einschubfächer ("Trays") bis hin zu so genannten Rangierfeldern (auch "Patchfelder" oder "Patchpanels" genannt) zum Herstellen und Verteilen von Datenverbindungen, beispielsweise über Netzwerkkabel, Telefonkabel oder Glasfaserkabel, verwendet. Ein solches Rangierfeld umfasst in der Regel zumindest eine Schnittstelle ("Interface") mit einer bestimmten Anzahl einzelner oder in Kassetten gruppierter Anschlüsse bzw. Steckverbinder. In der Praxis sind häufig mehrere Rangierfelder in einem gemeinsamen Verteilerrahmen (auch "Rack" genannt) in verschiedenen Höhenlagen installiert.

Aus Gründen der Zugänglichkeit der Schnittstellen des Rangierfeldes für den Servicetechniker sind die Rangierfelder bzw. Trays häufig aus dem Verteilerrahmen bedarfsweise ausziehbar und hierfür zusammen mit einem entsprechend ausgestalteten Trägergehäuse ("Chassis") in dem Verteilerrahmen befestigt, wie beispielsweise in der US 2022/0236510 A1 beschrieben. Das Trägergehäuse ist starr an dem Verteilerrahmen montiert und weist geeignete Linearauszüge für die Einschubfächer bzw. Trays auf. Um die Anschlussdichte weiter zu erhöhen, werden in der Regel mehrere Rangierfelder in einem gemeinsamen Trägergehäuse angeordnet.

Aus Gründen von Standardisierungsbestrebungen und einer möglichst hohen Modularität wird für derartige Trägergehäuse nur eine begrenzte Anzahl von Höhenvarianten bereitgestellt. Ferner lassen sich die Trägergehäuse nur in diskreter Beabstandung - als Vielfache einer so genannten "Höheneinheit" (HE) - in dem Verteilerrahmen montieren. Eine beliebige Höhenskalierbarkeit ist nicht möglich, weshalb Stauraum im Verteilerrahmen oftmals nicht optimal genutzt werden kann. Ferner ist die Konfigurationsvielfalt eingeschränkt und die in der Regel geschlossenen Trägergehäuse bieten auch nur einen eingeschränkten Zugang zu den Rangierfeldern von der Rückseite und von oben.

Hier setzt die Erfindung an.

In Anbetracht des bekannten Stands der Technik besteht die Aufgabe der vorliegenden Erfindung darin, eine Schienenanordnung für eine Trägereinheit für eine faseroptische Komponente, insbesondere für ein Rangierfeld bereitzustellen, mit der der Stauraum in einem Verteilerrahmen besser ausnutzbar ist, bei gleichzeitig guter Zugänglichkeit für einen Servicetechniker, und mit der vorzugsweise außerdem die Konfigurationsvielfalt für Trägereinheiten in einem gemeinsamen Verteilerrahmen erhöht werden kann.

Der vorliegenden Erfindung liegt auch die Aufgabe zugrunde, eine verbesserte Trägeranordnung und ein faseroptisches Verteilersystem bereitzustellen, mit vorzugsweise hoher Anschlussdichte, guter Zugänglichkeit für einen Servicetechniker und großer Konfigurationsvielfalt.

Die Aufgabe wird für die Schienenanordnung mit den in Anspruch 1 aufgeführten Merkmalen gelöst. Hinsichtlich der Trägeranordnung wird die Aufgabe durch Anspruch 13 und betreffend das faseroptische Verteilersystem durch Anspruch 16 gelöst. Die abhängigen Ansprüche und die nachfolgend beschriebenen Merkmale betreffen vorteilhafte Ausführungsformen und Varianten der Erfindung.

Es ist eine Schienenanordnung für eine Trägereinheit für eine faseroptische Komponente vorgesehen, insbesondere für ein Rangierfeld oder ein Einschubfach, aufweisend eine erste Montageschiene und eine separate zweite Montageschiene. Die Montageschienen sind voneinander beabstandet und ausgebildet, die Trägereinheit gemeinsam zwischeneinander aufzunehmen.

Die Trägereinheit weist vorzugsweise zumindest eine faseroptische Komponente auf (oder bietet zumindest die Möglichkeit zur Aufnahme einer faseroptischen Komponente) und kann beweglich oder unbeweglich bzw. starr zwischen den Montageschienen aufgenommen sein. Die Schienenanordnung kann insbesondere ausgebildet sein, die Trägereinheit entlang wenigstens eines Freiheitsgrades (insbesondere entlang wenigstens eines Translationsfreiheitsgrades) bewegbar zu führen und/oder eine Befestigungs- oder Ablagemöglichkeit, beispielsweise die nachfolgend noch erwähnte Auflagefläche, für die Trägereinheit bereitzustellen.

Die Schienenanordnung kann sich im Grunde für alle bekannten und zukünftigen Trägereinheiten eignen. Die Erfindung kann sich besonders vorteilhaft zur Verwendung mit optischen Einschubfächern oder Rangierfeldern eignen, gegebenenfalls auch zur Verwendung mit optisch-elektrischen Einschubfächern bzw. Rangierfeldern. Ein Einschubfach bzw. Rangierfeld beinhaltet optische und/oder elektrische Verteiltechnik und kann beispielsweise einzelne faseroptische und/oder elektrische Module bzw. Kassetten, einzelne faseroptische und/oder elektrische Steckverbinder (insbesondere Buchsen), Einrichtungen zur Speicherung von faseroptischen und/oder elektrischen Leitern und Leitungen oder sonstige optische und/oder elektrische Komponenten aufweisen. Die Trägereinheit kann auch nur zur reinen Aufnahme bzw. Ablage/Aufbewahrung und/oder zum Spleißen von Leitungen ausgebildet sein. Selbst Dummy-Trägereinheiten bzw. Dummy-Rangierfelder können vorgesehen sein, beispielsweise mit Frontplatten, die ausschließlich einen informativen Zweck erfüllen sollen, wie Beschriftungsfelder, oder als Abstandshalter.

Die "erste Montageschiene" und die "zweite Montageschiene" werden nachfolgend mitunter auch gemeinsam als "Montageschienen" bezeichnet.

Es ist vorzugsweise vorgesehen, dass es sich bei den Montageschienen der Schienenanordnung um voneinander unabhängige Bauteile handelt, die auch im montierten Zustand nicht miteinander verbunden sind - abgesehen von der gemeinsamen Verbindung mit der Trägereinheit und der gemeinsamen Verbindung mit dem Verteilerrahmen. Insbesondere kann auf zusätzliche Verbindungsstreben oder Verbindungsbleche zwischen den beiden Montageschienen einer gemeinsamen Schienenanordnung verzichtet werden.

Die Montageschienen können jeweils einstückig ausgebildet sein. Bei einer Montageschiene kann es sich allerdings auch um ein mehrteiliges Bauteil handeln.

Im grundsätzlich bevorzugten, mehrteiligen Fall kann insbesondere vorgesehen sein, dass die Montageschienen jeweils wenigstens eine Profilschiene und wenigstens eine mit der Profilschiene oder den Profilschienen verbundene Funktionskomponente(n) aufweisen. Die Funktionskomponente ist vorzugsweise auf der der Trägereinheit zugewandten Seite der Montageschiene angeordnet und weist unmittelbar mit der Trägereinheit interagierende Komponenten auf (z. B. das nachfolgend noch genannte Bewegungsbegrenzungsmittel etc.). Die Profilschiene kann als Träger für die Funktionskomponente dienen.

Die Funktionskomponente kann als Stabilisierungsschiene für die Profilschiene ausgebildet sein. Insbesondere in diesem Fall sind die Funktionskomponente und die Profilschiene (vorzugsweise unmittelbar) mechanisch starr miteinander verbindbar (kraftschlüssig, formschlüssig und/oder stoffschlüssig), insbesondere miteinander verrastbar. Die Profilschiene kann hierzu eine oder mehrere Verbindungselemente (z. B. eine Rastausnehmung oder einen Rücksprung) und die Funktionskomponente korrespondierende Verbindungselemente aufweisen (z. B. eines oder mehrere elastische Rastelemente). Auch eine bewegliche Befestigung zwischen Profilschiene und Funktionskomponente kann allerdings vorgesehen sein (insbesondere entlang oder entgegen der nachfolgend noch genannten Einschubrichtung), so dass die Funktionskomponente beispielsweise als Auszug dienen kann, mit dem die Trägereinheit mechanisch starr (insbesondere unmittelbar) verbunden ist.

Die Montageschienen können aus einem Metallbauteil ausgebildet sein oder zumindest metallische Komponenten aufweisen. Insbesondere die Profilschiene kann aus einem Metallbauteil ausgebildet sein. Beispielsweise können die Montageschienen, insbesondere Profilschienen, umgeformte Blechteile aufweisen oder als umgeformte Blechteile ausgebildet und zum Beispiel im Rahmen eines Stanz-Biege-Prozesses hergestellt sein.

Die Montageschienen, insbesondere die Funktionskomponenten, können auch aus einem Kunststoff ausgebildet sein oder zumindest Kunststoffkomponenten aufweisen. Vergleichsweise komplexe funktionale Merkmale lassen sich beispielsweise kostengünstig und mit hoher Genauigkeit und geringem Bauteilgewicht im Rahmen eines Spritzgussprozesses herstellen. Alternativ kann aber auch die Ausgestaltung der Funktionskomponenten als Blechteil vorgesehen sein.

Die beiden Montageschienen verlaufen vorzugsweise entlang ihrer Längserstreckungen bzw. Längsachsen parallel oder zumindest im Wesentlichen parallel zueinander.

Die beiden Montageschienen sind vorzugsweise entlang eines ersten Translationsfreiheitsgrades voneinander beabstandet (entsprechend der Breite der Schienenanordnung). Ein zweiter Translationsfreiheitsgrad definiert vorzugsweise die nachfolgend noch erwähnte Ein- und Ausschubrichtung für die Trägereinheit (entsprechend der Bautiefe der Schienenanordnung). Die Bauhöhe der Schienenanordnung ist vorzugsweise einem dritten Translationsfreiheitsgrad zugeordnet. Die genannten drei Translationsfreiheitsgrade sind gemäß der üblichen Definition jeweils orthogonal zueinander ausgerichtet.

Die Schienenanordnung kann in einer minimalistischen Ausführungsform beispielsweise zwei L-förmige Profilschienen umfassen, die die Montageschienen ausbilden und die unabhängig voneinander und ohne gegenseitige Verbindung an den Stützen eines Verteilrahmens montierbar sind.

Erfindungsgemäß ist vorgesehen, dass jede der Montageschienen wenigstens einen Befestigungspunkt zur Befestigung an einem Verteilerrahmen aufweist.

Vorzugsweise sind die Montageschienen an einer Vorderseite des Verteilerrahmens befestigbar, insbesondere von vorne. Grundsätzlich ist allerdings auch eine Befestigung beispielsweise an der Rückseite des Verteilerrahmens möglich oder eine Befestigung in einem mittleren Abschnitt des Verteilerrahmens.

Durch den jeweils wenigstens einen Befestigungspunkt kann jede Montageschiene an einer geeigneten Befestigungsposition des Verteilerrahmens montierbar sein. Vorzugsweise weist der Verteilerrahmen hierzu in definierten, diskret voneinander beabstandeten Höhenlagen entsprechende Befestigungspositionen für die einzelnen Montageschienen auf. Die Befestigungspositionen sind vorzugsweise um jeweils ein Drittel einer so genannten "Höheneinheit" (HE) voneinander beabstandet.

Insofern vorstehend und nachstehend von einer "Höheneinheit" gesprochen wird, so handelt es sich dabei um eine für Elektronikgehäuse typischerweise verwendete, dem Fachmann geläufige und genormte Maßeinheit, die insbesondere bezogen auf Gerätegehäuse zum Einbau in 19-Zoll-Racks bzw. 19-Zoll-Verteilerrahmen Verwendung findet. Eine Höheneinheit entspricht 1¾ Zoll bzw. 44,45 Millimeter.

Dadurch, dass zwei voneinander unabhängige Montageschienen für die Befestigung der Trägereinheit in dem gemeinsamen Verteilerrahmen verwendet werden, kann in dem Verteilerrahmen in der Regel jede vorhandene Befestigungsposition flexibel genutzt und modular mit beliebigen Trägereinheiten bestückt werden. Der Stauraum in dem Verteilerrahmen bzw. Verteilerschrank ist funktional optimal ausnutzbar. Gleichzeitig wird die Konfigurationsvielfalt in dem Verteilerrahmen maximiert.

Auf die Verwendung eines Gehäuses für die Trägereinheiten, beispielsweise eines Trägergehäuses für ein Einschubfach bzw. für ein Rangierfeld kann vorzugsweise verzichtet werden, wodurch Bauraum eingespart und Konfigurierbarkeit gewonnen wird.

Gegebenenfalls kann die Schienenanordnung auch mehrere erste Montageschienen und mehrere zweite Montageschienen aufweisen, wobei alle ersten Montageschienen auf derselben Seite des Verteilerrahmens und alle zweiten Montageschienen auf der gegenüberliegenden Seite des Verteilerrahmens angeordnet und daher von den ersten Montageschienen beabstandet sind. Alle Montageschienen der Schienenanordnung sind vorzugsweise auf derselben Höhenebene in dem Verteilerrahmen angeordnet. Insofern mehrere erste Montageschienen vorgesehen sind, können diese entlang der nachfolgend noch erwähnten Einschubrichtung oder des vorstehend erwähnten zweiten Translationsfreiheitsgrades voneinander beabstandet oder miteinander verbunden sein - dies gilt entsprechend auch für die mehreren zweiten Montageschienen.

An dieser Stelle sei erwähnt, dass die Schienenanordnung, insbesondere die erste Montageschiene und die zweite Montageschiene, ausgebildet sein können, mehr als eine Trägereinheit zwischeneinander aufzunehmen, beispielsweise zwei nebeneinander oder aufeinander angeordnete Trägereinheiten, drei nebeneinander und/oder aufeinander angeordnete Trägereinheiten, vier nebeneinander und/oder aufeinander angeordnete Trägereinheiten oder noch mehr Trägereinheiten in beliebiger Anordnung. In diesem Fall können die Trägereinheiten untereinander mechanisch starr oder beweglich verbunden sein. Im Rahmen der Erfindung kommt es insbesondere darauf an, dass die erste Montageschiene und die zweite Montageschiene voneinander separat ausgebildet und voneinander unabhängig in dem Verteilerrahmen montiert bzw. montierbar sind, um einen Slot bzw. Einschub für wenigstens eine Trägereinheit auszubilden.

Es kann vorgesehen sein, dass die erste Montageschiene und die zweite Montageschiene entlang des dritten Translationsfreiheitsgrades in derselben Höhenlage angeordnet sind, insbesondere in dem Verteilerrahmen in derselben Höhenlage angeordnet ist. Grundsätzlich kann allerdings auch ein Versatz in der Höhenlage vorgesehen sein (je nach Ausgestaltung der Trägereinheit), was allerdings nicht bevorzugt ist.

Die Schienenanordnung kann in dem Verteilerrahmen derart montiert bzw. montierbar sein, dass die erste Montageschiene an einer ersten Vertikalstrebe und die zweite Montageschiene an einer zweiten Vertikalstrebe des Verteilerrahmens befestigt ist, wobei besagte Vertikalstreben vorzugsweise an derselben Seite des Verteilerrahmens angeordnet sind (insbesondere an der Vorderseite des Verteilerrahmens).

Die erste Montageschiene und die zweite Montageschiene sind in dem montierten Zustand der Schienenanordnung in dem Verteilerrahmen vorzugsweise auf derselben Höhenlage des Verteilerrahmens montiert.

Die erste Montageschiene und die zweite Montageschiene sind in dem montierten Zustand der Schienenanordnung in dem Verteilerrahmen vorzugsweise derart ausgerichtet, dass die nachfolgend noch genannte Einschubrichtung (oder eine der Einschubrichtung entgegengesetzte Ausschubrichtung) bzw. der vorstehend genannte zweite Translationsfreiheitsgrad in derselben Höhenebene bzw. Höhenlage des Verteilerrahmens verläuft. Eine durch die Schienenanordnung geführte Bewegung der Trägereinheit kann daher vorzugsweise auf derselben Höhenlage des Verteilerrahmens verlaufen, also horizontal bzw. parallel zu einer Aufstellfläche des Verteilerrahmens.

Es kann aber auch eine vertikale Führung der Trägereinheit im montierten Zustand der Schienenanordnung vorgesehen sein, also insbesondere eine in dem Verteilerrahmen "hängende" Ausgestaltung. In diesem Fall kann vorgesehen sein, dass die Ein- und Ausschubrichtung bzw. der vorstehend genannte zweite Translationsfreiheitsgrad mehrere Höhenebenen bzw. Höhenlagen des Verteilerrahmens schneidet. Die Ein- und Auszugsrichtung verläuft daher vertikal bzw. orthogonal zu der Aufstellfläche des Verteilerrahmens.

Auch eine gemischt horizontale und vertikale Ein- und Auszugsbewegung, also eine in Bezug auf die Aufstellfläche des Verteilerrahmens schräge Führung der Trägereinheit kann vorgesehen sein.

Nachfolgend ist die Erfindung zum leichteren Verständnis im Wesentlichen anhand der rein horizontalen Ein- und Auszugsrichtung beschrieben. Die nachfolgenden Varianten und Weiterbildungen eigenen sich allerdings auch für eine hängende bzw. vertikale Anordnung oder für eine schräge Anordnung, sofern dies technisch nicht ausgeschlossen ist.

Wie bereits erwähnt, kann sich die Schienenanordnung vorteilhaft dazu eignen, wenigstens eine Trägereinheit zwischen den Montageschienen bewegbar zu führen, insbesondere entlang zumindest eines Translationsfreiheitsgrades. Dabei kann gegebenenfalls auch eine mehrdimensionale Führung vorgesehen sein, beispielsweise entlang mehrerer Translationsfreiheitsgrade. Auch eine dreh- oder schwenkbare Anordnung der Trägereinheit in der Schienenanordnung, also eine Führung entlang zumindest eines Rotationsfreiheitsgrades, kann gegebenenfalls vorgesehen sein. Die bewegliche Führung der Trägereinheit kann insbesondere vorteilhaft sein, um eine besonders komfortable, bedarfsweise Zugänglichkeit für den Servicetechniker bereitzustellen.

In einer besonders bevorzugten Weiterbildung der Erfindung können die Montageschienen ausgebildet sein, die Trägereinheit derart aufzunehmen, dass die Trägereinheit entlang zumindest einer Einschubrichtung (und vorzugsweise einer der Einschubrichtung entgegengesetzten Ausschubrichtung, also zumindest abschnittsweise entlang eines Translationsfreiheitsgrades, beispielsweise des vorstehend erwähnten "zweiten" Translationsfreiheitsgrades) bewegbar geführt ist. Vorzugsweise, aber nicht notwendigerweise, erfolgt die Führung ausschließlich entlang der Ein- und Ausschubrichtung.

Es können gegebenenfalls auch mehrere Einschubrichtungen vorgesehen sein, beispielsweise eine erste Einschubrichtung und eine zweite Einschubrichtung, vorzugsweise eine der ersten Einschubrichtung entgegengerichtete, zweite Einschubrichtung. Im Falle mehrerer Einschubrichtungen können die Zugangsmöglichkeiten für den Servicetechniker weiter erhöht werden.

Die Schienenanordnung vermag daher die Trägereinheit in der Art eines Schubfaches bzw. einer Schublade zu führen, was eine besonders gute Zugänglichkeit zu Komponenten der Trägereinheit im montierten Zustand der Schienenanordnung ermöglichen kann.

In einer zu der Führung der Trägereinheit alternativen oder ergänzenden Weiterbildung der Erfindung kann vorgesehen sein, dass die Montageschienen jeweils eine Auflagefläche für die Trägereinheit aufweisen, auf der die zwischen den Montageschienen aufgenommene Trägereinheit aufzuliegen vermag.

Im mehrteiligen Fall der Montageschienen kann insbesondere die Profilschiene die Auflagefläche aufweisen. Auch die Funktionskomponente kann aber gegebenenfalls eine Auflagefläche bilden.

Die Trägereinheit kann somit auf den Auflageflächen der Montageschienen sicher und stabil aufliegen. Die sich gegenüberliegenden Montageschienen können damit auf besonders einfache und robuste Weise einen Slot bzw. Schacht zur Aufnahme einer Trägereinheit ausbilden.

Insbesondere kann eine im Wesentlichen oder vollständige L-förmige Ausgestaltung der Montageschienen bzw. Profilschienen vorgesehen sein, beispielsweise durch ein L-förmig gebogenes Blechprofil.

Optional kann die Trägereinheit formschlüssig und/oder kraftschlüssig mittelbar oder unmittelbar mit der jeweiligen Montageschiene verbunden sein.

Alternativ oder zusätzlich zu einer Auflagefläche können beliebige technische Konzepte zur Befestigung und/oder Führung der Trägereinheit zwischen den beiden Montageschienen vorgesehen sein. Beispielsweise kann eine jeweilige Längsnut in der Montageschiene vorgesehen sein (insbesondere in der Funktionskomponente), in der ein Abschnitt der Trägereinheit verschiebbar aufgenommen ist. Auch ein teleskopierbares Auszugssystem kann vorgesehen sein (beispielsweise eine Teleskopierbarkeit zwischen Profilschiene und Funktionskomponente und/oder zwischen Funktionskomponente und Trägereinheit.

Insbesondere kann aber die Auflagefläche gleichzeitig als Führungsfläche für die vorstehend genannte geführte Bewegung der Trägereinheit dienen. Eine bewegliche Aufnahme der Trägereinheit zwischen den Montageschienen ist im Rahmen der Erfindung allerdings nicht unbedingt erforderlich, weshalb die Auflagefläche auch lediglich eine stützende Funktion bzw. eine reine Auflagefunktion erfüllen kann.

Nachfolgend wird die Erfindung im Wesentlichen anhand einer Schienenanordnung beschrieben, die gleichzeitig eine Führungs- und eine Auflagefunktion für die Trägereinheit bereitstellt. Dies soll allerdings nicht einschränkend verstanden werden.

Eine Montagemöglichkeit zum Einfügen der Trägereinheit zwischen die Montageschienen kann auf verschiedene Weise bereitgestellt werden. Insbesondere kann vorgesehen sein, dass die Trägereinheit auch dann in die Schienenanordnung einfügbar ist, wenn sich die Schienenanordnung in ihrem montierten Zustand in dem Verteilerrahmen befindet. In diesem Fall kann eine Montage vorzugsweise in oder entgegen der Einschubrichtung (also von der Vorderseite der Montageschienen oder von der Rückseite der Montageschienen) erfolgen und/oder von "oben", also in Richtung auf die vorstehend genannte Auflagefläche der Montageschienen.

Gemäß einer Weiterbildung der Erfindung kann vorgesehen sein, dass die Bauhöhe der ersten Montageschiene und der zweiten Montageschiene (insbesondere inklusive der Trägereinheit) jeweils kleiner ist als eine Höheneinheit, vorzugsweise nicht über 2/3 einer Höheneinheit hinausgeht, besonders bevorzugt nicht über 1/3 einer Höheneinheit hinausgeht.

Vorzugsweise sind die Montageschienen derart ausgestaltet, dass weder die Montageschiene selbst noch die Trägereinheit in ihrem zwischen den Montageschienen montierten Zustand in der Bauhöhe über zwei Drittel einer Höheneinheit, vorzugsweise ein Drittel einer Höheneinheit, hinausragen. Insbesondere kann die jeweilige Montageschiene hierzu auch eine geringere Bauhöhe aufweisen als ein Drittel einer Höheneinheit.

Es kann auch vorgesehen sein, dass die Bauhöhe der ersten Montageschiene und der zweiten Montageschiene jeweils ein Vielfaches von einem Drittel einer Höheneinheit beträgt, also mindestens 1/3 einer Höheneinheit beträgt, beispielsweise auch genau eine Höheneinheit beträgt oder mehr als eine Höheneinheit beträgt.

Gemäß einer Weiterbildung kann insbesondere vorgesehen sein, dass die Bauhöhe der ersten Montageschiene und der zweiten Montageschiene jeweils nicht über (n-1)/n einer Höheneinheit hinausgeht, wobei n einer natürlichen Zahl größer 1 entspricht. Die Bauhöhe der ersten Montageschiene und der zweiten Montageschiene kann also beispielsweise kleiner oder gleich 1/2 HE, 2/3 HE, 3/4 HE, 4/5 HE usw. sein. Vorzugsweise geht die Bauhöhe der ersten Montageschiene und der zweiten Montageschiene aber jeweils nicht über 1/n einer Höheneinheit hinaus, wobei n wiederum einer natürlichen Zahl größer 1 entspricht. Die Bauhöhe der ersten Montageschiene und der zweiten Montageschiene kann in dieser noch weiter bevorzugten Variante also beispielsweise kleiner oder gleich 1/2 HE, 1/3 HE, 1/4 HE, 1/5 HE usw. sein.

Da die beiden Montageschienen keine Verbindung zueinander und gegebenenfalls jeweils auch nur einen einzigen Befestigungspunkt zum Verteilrahmen aufweisen, kann es gegebenenfalls (aber nicht notwendigerweise) vorteilhaft sein, die mechanische Steifigkeit der Schienenanordnung zu erhöhen.

In einer Weiterbildung der Erfindung kann daher vorgesehen sein, dass die erste Montageschiene und die zweite Montageschiene jeweils Mittel zur Erhöhung der mechanischen Steifigkeit aufweisen.

Eine Erhöhung der mechanischen Steifigkeit kann beispielsweise durch gezielte Umkantungen, Materialverstärkungen, Verstrebungen oder sonstige bekannte Ertüchtigungsmaßnahmen der Montageschiene erreicht werden, insbesondere in den Profilschienen einer mehrteiligen Montageschiene. Auch die Verwendung eines Materialverbundes aus zumindest zwei Grundmaterialien kann vorgesehen sein, beispielsweise eine Metall-Kunststoff-Kombination oder eine Kombination verschiedener Metalle oder Kunststoffe in derselben Montageschiene.

Auf diese Weise ist es möglich, die Montageschienen beispielsweise als dünne Blechteile auszugestalten und nachträglich zu versteifen, was die Materialkosten für die Herstellung der Montageschienen reduzieren kann.

Gemäß einer Weiterbildung der Erfindung kann insbesondere auch vorgesehen sein, dass die Schienenanordnung wenigstens eine Verbindungseinrichtung aufweist, um die erste Montageschiene oder die zweite Montageschiene mit zumindest einer benachbarten, weiteren Montageschiene einer weiteren Schienenanordnung mechanisch zu verbinden (im Falle einer gestapelten Anordnung also mit einer oberhalb und/oder unterhalb, also auf einer benachbarten Höhenlage befindlichen, weiteren Montageschiene).

Insbesondere kann vorgesehen sein, dass jeweils zumindest eine Verbindungseinrichtung pro Montageschiene vorgesehen ist (also eine Versteifung auf beiden Seiten der Schienenanordnung), vorzugsweise mit jeweils mehreren entlang der Längsachse der jeweiligen Montageschiene verteilt angeordneten Verbindungseinrichtungen.

Eine Verbindungseinrichtung kann ausgebildet sein, um jeweils genau zwei unmittelbar aneinander angrenzende, vorzugsweise auf unterschiedlichen Höhenlagen befindliche Montageschienen zu verbinden. Es können von einer einzigen Verbindungseinrichtung gegebenenfalls aber auch mehrere Montageschienen miteinander verbunden werden, beispielsweise indem die Verbindungseinrichtung seitlich entlang der Montageschienen verlaufend angeordnet ist und jeweilige Befestigungsmöglichkeiten für die einzelnen Montageschienen bereitstellt (wie Aufnahmeschlitze, Bohrungen für eine Schraubverbindung, Stifte etc.).

Die Befestigungsmöglichkeiten bzw. Komponenten der Verbindungseinrichtung, insbesondere die nachfolgend noch erwähnten Verbindungsmittel, können mit horizontalen und/oder vertikalen Abschnitten der Montageschienen verbunden sein.

Insbesondere wenn mehrere Trägereinheiten in jeweiligen Schienenanordnungen unmittelbar übereinander in der Art eines Stapels (ein Stapel von Trägereinheiten ist auch als "Register" bekannt) angeordnet werden sollen, kann sich eine mechanische Stabilisierung des Stapels als vorteilhaft erweisen. Hierzu eignet sich insbesondere eine unmittelbare mechanische Verbindung aneinander angrenzender Schienenanordnungen über die vorstehend genannten Verbindungseinrichtungen. Alle beteiligten Schienenanordnungen können hierdurch mechanisch versteift werden.

Vorzugsweise sind mehrere entlang der Längsachse der jeweiligen Montageschienen (bzw. entlang des zweiten Translationsfreiheitsgrades) verteilte Verbindungseinrichtungen vorgesehen, beispielsweise zwei Verbindungseinrichtungen, drei Verbindungseinrichtungen, vier Verbindungseinrichtungen, fünf Verbindungseinrichtungen oder noch mehr Verbindungseinrichtungen. Die mechanische Verbindung zwischen den Montageschienen kann dadurch weiter verstärkt werden.

Es kann auch vorgesehen sein, dass die Verbindungseinrichtung eine oder mehrere Sollbruchstellen aufweist, so dass die Verbindung zwischen den von der Verbindungseinrichtung verbundenen Montageschienen bedarfsweise von einem Servicetechniker getrennt werden kann. Im Auslieferzustand können somit über mehrere Höhenlagen miteinander verbundene bzw. gestapelte Montageschienen bereitgestellt werden, die dann bedarfsweise separiert werden können.

Die Verbindungseinrichtung kann vorzugsweise mehrere Komponenten aufweisen, wie Bleche, Kunststoffträger, Befestigungsmittel (z. B. Schrauben oder Bolzen), Verbindungsausnehmungen, Verbindungsglieder, insbesondere wenigstens eines der nachfolgend noch erwähnten Verbindungsmittel. Die Verbindungseinrichtung kann insbesondere Ausnehmungen in der Montageschiene und zumindest ein separates Verbindungsmittel, insbesondere ein Verbindungsglied wie eine Schraube, einen Stift oder einen Bolzen, aufweisen.

Die Verbindungseinrichtung oder Komponenten der Verbindungseinrichtung kann bzw. können unmittelbar in der jeweiligen Montageschiene ausgebildet sein (beispielsweise kann die Montageschiene die bereits erwähnten Verbindungsausnehmungen aufweisen). Im Falle einer mehrteiligen Montageschiene kann die Verbindungsausnehmung in der Profilschiene und/oder in der Funktionskomponente ausgebildet sein.

Die Funktionskomponente und die Profilschiene können gemeinsam die Führung für die Trägereinheit bereitstellen, weshalb für die Führung vorteilhafte oder erforderliche Komponenten an der Funktionskomponente und/oder der Profilschiene angeordnet sein können. Insbesondere kann allerdings vorgesehen sein, dass die Funktionskomponente das nachfolgend noch genannte Bewegungsbegrenzungsmittel, Komponenten der nachfolgend noch genannten Fixierungsanordnung, Komponenten des nachfolgend noch genannten Linearführungspaares und/oder sonstige Merkmale aufweisen, die vorstehend und nachfolgend hinsichtlich der Montageschienen oder Profilschienen beschrieben werden.

An dieser Stelle sei erwähnt, dass die Schienenanordnung nicht unbedingt eine Verbindungseinrichtung zu benachbarten Schienenanordnungen aufweisen muss. Beispielsweise bereits eine Kombination aus Profilschiene und Funktionskomponente kann gegebenenfalls ohne die Verbindung mit weiteren Stabilisierungs- oder Verstärkungsmaßnahmen ausreichend mechanisch stabilisierend wirken. Vorzugsweise werden allerdings insbesondere übereinander angeordnete Montageschienen zueinander fixiert.

In einer Weiterbildung kann insbesondere vorgesehen sein, dass die Verbindungseinrichtung wenigstens ein unmittelbar an den zu verbindenden benachbarten Montageschienen befestigbares Verbindungsmittel aufweist, wobei das Verbindungsmittel vorzugsweise mit den jeweiligen Montageschienen verschraubbar, verrastbar und/oder verpressbar ist.

Das Verbindungsmittel ist vorzugsweise als Verbindungsglied ausgebildet oder weist ein Verbindungsglied auf, das mit der jeweiligen Montageschiene mechanisch fest verbunden, vorzugsweise aber separat ausgebildet sein kann. Das Verbindungsglied kann zumindest mit einem ersten Abschnitt (insbesondere ein Endabschnitt) in einer Verbindungsausnehmung einer Montageschiene montierbar und gleichzeitig in einer weiteren Verbindungsausnehmung einer angrenzenden Montageschiene einer weiteren Schienenanordnung befestigbar (insbesondere verrastbar, verschraubbar oder verpressbar) sein. Das Verbindungsglied kann an seinem ersten Abschnitt bzw. Endabschnitt vorzugsweise eines oder mehrere elastische Rastmittel, Gewindeelemente und/oder eine Anlageschulter aufweisen.

Das Verbindungsglied kann an einem zweiten Endabschnitt optional ausgebildet sein, den ersten Endabschnitt eines Verbindungsgliedes einer benachbarten Schienenanordnung in sich aufzunehmen, um Bauraum einzusparen. Das Verbindungsglied kann daher, insbesondere an seinem zweiten Endabschnitt, hohl ausgebildet sein, beispielsweise hohlzylinderförmig.

Die Verbindungseinrichtung kann optional außerdem eine in derselben Montageschiene unterhalb der oberseitigen Verbindungseinrichtung angeordnete, unterseitige Verbindungsausnehmung aufweisen.

Die oberseitige Verbindungsausnehmung und die unterseitige Verbindungsausnehmung sind vorzugsweise zueinander fluchtend angeordnet. Insbesondere im mehrteiligen Fall der Montageschiene kann vorgesehen sein, dass die oberseitige Verbindungsausnehmung in der Funktionskomponente und die unterseitige Verbindungsausnehmung in der Profilschiene ausgebildet sind. Insbesondere im einteiligen Fall der Montageschiene kann gegebenenfalls auch bereits eine einzige Verbindungsausnehmung ausreichend sein, um die Montageschiene über ein separates oder mit der Montageschiene (einteilig oder mehrteilig) verbundenes Verbindungsglied mit der darüber oder darunter angeordneten Montageschiene zu verbinden.

Die oberseitige und/oder unterseitige Verbindungsausnehmung kann beispielsweise als Langloch, Durchgangsbohrung oder sonstige Ausnehmung in der Montageschiene ausgebildet sein.

Vorzugsweise verjüngt sich die Verbindungsausnehmung entlang einer Raumrichtung und/oder weist einen Durchmessersprung auf, um eine formschlüssige Fixierung des Verbindungsgliedes zu ermöglichen. Beispielsweise kann die Verbindungsausnehmung als Langloch-Bohrung-Kombination ausgebildet sein (Schlüsselloch-Form), so dass beispielsweise ein in die Bohrung eingeführtes Verbindungsglied durch Verschieben entlang der Längsachse der Montageschiene formschlüssig fixierbar ist (das Verbindungsglied kann hierzu einen Durchmessersprung aufweisen, beispielsweise eine Schulter oder eine sonstige Anlagefläche).

Bei dem Verbindungsglied kann es sich beispielsweise um eine Schraube oder einen Bolzen handeln. Vorzugsweise ist das Verbindungsglied allerdings als Spreizkopf ausgebildet und weist einen Bolzen auf, der an zumindest einem Endabschnitt elastisch aufspreizbar ausgebildet ist, um in einer geeigneten Verbindungsausnehmung der benachbarten Schienenanordnung zu verrasten.

Es kann auch vorgesehen sein, dass das Verbindungsmittel der Verbindungseinrichtung platten- oder schienenförmig ausgebildet ist, beispielsweise als flaches Kunststoffbauteil oder Metallblecht, das an den Seitenflächen der zu verbindenden Montageschienen befestigbar ist. Das platten- oder schienenförmige Verbindungsmittel kann somit zwei oder mehr Montageschienen seitlich miteinander verbinden. Hierzu können das platten- oder schienenförmige Verbindungsmittel und/oder die Montageschienen jeweilige Bohrungen aufweisen, um eine Schraub-, Rast- oder Steckverbindung zu ermöglichen, wobei aber auch andere Befestigungsmöglichkeiten vorgesehen sein können.

Außerdem kann auch vorgesehen sein, dass das Verbindungsmittel seitliche Aussparungen (z. B. Nuten) und/oder seitliche Stege bzw. Rippen aufweist, in die die miteinander zu verbindenden Montageschienen einfügbar sind. Die Montageschienen können in den Aussparungen oder auf den Stegen bzw. Rippen beispielsweise verrastet, verpresst oder verschraubt sein.

In einer Weiterbildung der Erfindung kann vorgesehen sein, dass die erste Montageschiene und/oder die zweite Montageschiene ein rückseitiges Bewegungsbegrenzungsmittel aufweist, um die Bewegung der Trägereinheit zumindest in Einschubrichtung zu begrenzen.

Somit kann vermieden werden, dass die Trägereinheit rückseitig in den Verteilerrahmen hinein- bzw. aus der Schienenanordnung unbeabsichtigt herausgeschoben wird.

Es kann alternativ oder ergänzend auch vorgesehen sein, dass die erste Montageschiene und/oder die zweite Montageschiene ein vorderseitiges Bewegungsbegrenzungsmittel aufweist, um die Bewegung der Trägereinheit zumindest entgegen der Einschubrichtung zu begrenzen, so dass die Trägereinheit nach vorne nicht unbeabsichtigt aus dem Verteilerrahmen bzw. aus der Schienenanordnung vollständig herausgeschoben werden kann.

Das vorderseitige oder rückseitige Bewegungsbegrenzungsmittel kann optional bedarfsweise zerstörungsfrei lösbar bzw. entriegelbar sein, beispielsweise durch Betätigen des nachfolgend noch erwähnten Rasthebels.

Wie bereits erwähnt, kann das Bewegungsbegrenzungsmittel vorzugsweise in der Funktionskomponente einer mehrteiligen Montageschiene ausgebildet sein (z. B. als elastische Kunststofffahne). Das Bewegungsbegrenzungsmittel kann allerdings auch einteilig mit der Profilschiene oder einer einteiligen Montageschiene ausgebildet sein, beispielsweise als umgeformter Blechabschnitt.

Vorzugsweise ist das Bewegungsbegrenzungsmittel in oder entgegen der Einschubrichtung zumindest abschnittsweise elastisch ausgebildet und weist beispielsweise eine Feder auf, insbesondere eine Blattfeder. Das Bewegungsbegrenzungsmittel kann somit neben der Begrenzung der Einschubtiefe, also neben einer Fixierungs- oder Stopperfunktion, das Herausschieben der Trägereinheit aus der Schienenanordnung in Auszugsrichtung (also entgegen der Einschubrichtung) zumindest unterstützen, beispielsweise die Trägereinheit nach vorne drücken, sobald eine Entriegelung, beispielsweise eine Entriegelung eines Rasthebels der nachfolgend noch genannten Fixierungsanordnung, von dem Servicetechniker betätigt wird.

In einer Weiterbildung der Erfindung kann vorgesehen sein, dass das Bewegungsbegrenzungsmittel ausgebildet ist, die Bewegung der Trägereinheit ausschließlich entlang der Einschubrichtung oder entgegen der Einschubrichtung zu begrenzen und in der entgegengesetzten Richtung passieren zu lassen. Hierdurch kann eine Montagemöglichkeit für die Trägereinheit ausgehend von dem das Bewegungsbegrenzungsmittel aufweisenden Ende der Montageschiene bereitgestellt werden.

Dies kann vorzugsweise erfolgen, indem das Bewegungsbegrenzungsmittel vorübergehend und zerstörungsfrei von der Trägereinheit umbiegbar ist.

Die Trägereinheit kann somit beispielsweise, alternativ oder zusätzlich zur Einschubmöglichkeit von vorne, auch von der Rückseite in den Slot bzw. zwischen die beiden Montageschienen eingeschoben werden. Insbesondere die vorstehend genannte Blattfeder kann derart gestaltet sein, dass sie sich in die nicht zu begrenzende Richtung vorübergehend und zerstörungsfrei umbiegt, um ein vorbeischieben der Trägereinheit zu ermöglichen. Wird die Trägereinheit etwas über die Frontebene des Verteilerrahmens hinausgeschoben, vermag das Bewegungsbegrenzungsmittel schließlich wieder seine Ausgangsposition anzunehmen.

In einer Weiterbildung der Erfindung kann vorgesehen sein, dass der Befestigungspunkt der ersten Montageschiene und/oder der zweiten Montageschiene an einem Endabschnitt der jeweiligen Montageschiene angeordnet ist. Der Endabschnitt kann insbesondere an einem in Auszugrichtung vorderen Ende der Montageschiene vorgesehen sein.

Insbesondere kann vorgesehen sein, dass der den Befestigungspunkt aufweisende Endabschnitt quer bzw. orthogonal zu der Ein- / Auszugsrichtung der Trägereinheit verläuft, beispielsweise als Lasche oder Fahne. Der Befestigungspunkt kann aber beispielsweise auch an einer Seitenfläche der Montageschiene ausgebildet sein.

Grundsätzlich kann der Befestigungspunkt an einem beliebigen Abschnitt der Montageschiene vorgesehen sein, also auch an einem mittleren Abschnitt (optional wiederum als Lasche oder Fahne).

Die Montageschiene kann folglich mit ihrem Befestigungspunkt, insbesondere einer Ausnehmung, an der vorgesehenen Befestigungsposition bzw. Höhenlage des Verteilerrahmens positioniert und über ein Befestigungsmittel (z. B. eine Schraube, ein Bolzen oder eine Federklemme) an dem Verteilerrahmen befestigt werden. Das Befestigungsmittel kann einteilig mit der Montageschiene oder dem Verteilerrahmen ausgebildet sein - vorzugsweise handelt es sich aber um ein separates Bauteil.

Beispielsweise kann der Befestigungspunkt der Montageschiene als Bohrung, vorzugsweise als übergroße Bohrung oder als Langloch, besonders bevorzugt als schräg verlaufendes Langloch (beispielsweise schräg zwischen dem vorstehend erwähnten zweiten und dritten Translationsfreiheitsgrad), ausgebildet sein.

Durch ein Langloch oder eine übergroße Bohrung kann sichergestellt werden, dass zwischen den beiden voneinander unabhängigen Montageschienen kein unerwünschter Höhenversatz entsteht und Montagetoleranzen bei der Befestigung in dem Verteilerrahmen sowie Toleranzen des Verteilrahmens und der Montageschienen ausgeglichen werden können. Durch ein schräg verlaufendes Langloch oder eine übergroße Bohrung können vorteilhaft vertikale wie auch horizontale Korrekturen in der Positionierung vorgenommen werden.

Der Befestigungspunkt kann auch als Vorsprung, beispielsweise Stift, Steg oder Gewindestift, ausgebildet sein, um die Montageschiene unmittelbar in einer Ausnehmung des Verteilerrahmens zu befestigen. Es kann auch vorgesehen sein, dass der Befestigungspunkt eine Schnappverbindung aufweist.

Es können mehrere Befestigungspunkte pro Montageschiene vorgesehen sein, beispielsweise zwei, drei, vier oder noch mehr Befestigungspunkte. In der Regel ist allerdings bereits ein einziger Befestigungspunkt ausreichend. Die Verwendung eines einzigen Befestigungspunktes kann zudem zu einer besonders kompakten Schienenanordnung führen.

In einer vorteilhaften Weiterbildung der Erfindung kann vorgesehen sein, dass die erste Montageschiene und die zweite Montageschiene denselben strukturellen und/oder funktionellen Aufbau aufweisen. Vorzugsweise sind die Montageschienen allerdings zueinander spiegelsymmetrisch ausgebildet.

Insbesondere die Funktionskomponenten einer mehrteiligen Montageschiene weisen vorzugsweise denselben strukturellen und/oder funktionellen Aufbau auf und sind spiegelsymmetrisch ausgebildet.

Die Erfindung betrifft auch eine Trägeranordnung, aufweisend eine Trägereinheit, insbesondere ein Rangierfeld oder ein Einschubfach, und eine Schienenanordnung für die Trägereinheit gemäß einem der vorstehenden und nachfolgenden Ausführungen, wobei die Trägereinheit zwischen den beiden Montageschienen aufgenommen ist (vorzugsweise unmittelbar mit den beiden Montageschienen verbunden ist).

Vorzugsweise, aber nicht notwendigerweise, ist die Trägereinheit dabei derart zwischen den Montageschienen aufgenommen, dass die Trägereinheit entlang zumindest eines Translationsfreiheitsgrades bewegbar ist, insbesondere entlang der vorstehend bereits erwähnten Ein- und Auszugsrichtung.

Durch die Verwendung separater Montageschienen in der vorgeschlagenen Trägeranordnung kann aufgrund der vorzugsweise gehäuselosen Trägereinheiten eine sehr gute Zugänglichkeit zu den Trägereinheiten bzw. in den Innenraum des Verteilerrahmens bereitgestellt werden. Gleichzeitig wird eine besonders modulare Zusammenstellung verschiedener Arten und Höhenvarianten von Trägereinheiten möglich.

Bei den bekannten Trägergehäusen mit hohen Portdichten ergeben sich mitunter Probleme, im voll belegten Zustand einzelne Konnektoren bzw. Anschlüsse zugänglich zu machen. Insbesondere wenn sich benachbarte Ports im laufenden Betrieb befinden, ergibt sich das Risiko für Störungen der Datenverbindung. Die Möglichkeit, einzelne Trägereinheiten aus dem Stapel in Richtung des Servicetechnikers zu entnehmen (beispielsweise von den Auflageflächen der Montageschienen abzuheben) und/oder herauszuziehen, steigert die Zugänglichkeit einzelner Ports und reduziert dieses Risiko. Auf diese Weise kann sogar Zugang zu den rückwärtigen Ports auf der Trägereinheit ermöglicht werden. Eine starre Verschraubung individueller Trägergehäuse kann vermieden werden und der Zugang zu den Trägereinheiten wird nicht von dem geschlossenen Trägergehäuse blockiert. Die Montagezeit kann dadurch maßgeblich reduziert und die Wartungsfreundlichkeit erhöht sein.

Schließlich bietet sich durch den offenen Aufbau der zweigeteilten Schienenanordnung (also durch die zwei separaten Montageschienen) die Möglichkeit, hochfaserige Verteilerkanäle (so genannte "Trunks") zur Verteilung einer Vielzahl von Leitungen zwischen verschiedenen Höhenebenen des Verteilerrahmens vorteilhafter einzusetzen, da die Verbindungsabschnitte ("Trunklegs") der Verteilerkanäle über mehrere Höhenlagen hinweg auf einfache Art und Weise mit den einzelnen Trägereinheiten verbunden werden können.

In einer vorteilhaften Weiterbildung der Erfindung kann vorgesehen sein, dass zwischen zumindest einer der beiden Montageschienen und einer Seitenfläche der Trägereinheit ein Linearführungspaar ausgebildet ist. Das Linearführungspaar kann insbesondere zwischen zumindest einer Funktionskomponente einer mehrteiligen Montageschiene und der zugeordneten Seitenfläche der Trägereinheit ausgebildet sein. Alternativ kann das Linearführungspaar aber auch unmittelbar zwischen der jeweiligen Profilschiene der Montageschiene und der Seitenfläche der Trägereinheit ausgebildet sein.

Das Linearführungspaar kann vorzugsweise eine Linearführung in Ein- und Auszugsrichtung, gegebenenfalls aber auch orthogonal hierzu, insbesondere in Vertikalrichtung bzw. entlang des dritten Translationsfreiheitsgrades, bereitstellen. Eine Linearführung in Vertikalrichtung kann vorteilhaft ein Einlegen der Trägereinheit in die Schienenanordnung unterstützen.

Beispielsweise kann ein erster Verbindungspartner des Linearführungspaares als Führungsnut und ein zweiter Verbindungspartner des Linearführungspaares als korrespondierender Nutenstein ausgebildet sein. So kann beispielsweise eine T-Nut-Verbindung oder eine Schwalbenschwanz-Verbindung realisiert werden.

Das Linearführungspaar vermag eine Verliersicherheit aufgrund eines zusätzlichen Formschlusses zwischen Montageschiene und Trägereinheit bereitzustellen und die Führung außerdem mechanisch zu stabilisieren.

In einer vorteilhaften Weiterbildung der Erfindung kann vorgesehen sein, dass zwischen zumindest einer der beiden Montageschienen und einer Seitenfläche der Trägereinheit eine Fixierungsanordnung ausgebildet ist, um die Trägereinheit entlang oder entgegen der Einschubrichtung in zumindest einer Auszugsposition und/oder in einer Betriebsposition (bei der "Betriebsposition handelt es sich vorzugsweise um eine vollständig geschlossene Position) zu fixieren, vorzugsweise jeweils lösbar zu fixieren. Die Fixierungsanordnung kann insbesondere zwischen zumindest einer Funktionskomponente einer mehrteiligen Montageschiene und der zugeordneten Seitenfläche der Trägereinheit ausgebildet sein.

Die Montageschiene (insbesondere die Funktionskomponente) kann beispielsweise eine erste Fixiereinheit und die Seitenfläche der Trägereinheit eine zweite Fixiereinheit aufweisen, um die Fixierungsanordnung auszubilden. Auf diese Weise kann eine definierte Bewegungsbegrenzung ermöglicht werden. Die Fixierung der Auszugsposition bzw. Betriebsposition der Trägereinheit kann dergestalt sein, dass sie für den Servicetechniker unüberwindbar oder bei definierter Kraftaufbringung (zerstörungsfrei) überwindbar ist.

Gemäß einer Ausgestaltung der Erfindung kann vorgesehen sein, dass die Fixierungsanordnung ausgebildet ist, die Trägereinheit entlang des zweiten Translationsfreiheitsgrades in einer teilausgezogenen Position ("Teilauszug") und/oder in einer vollausgezogenen Position ("Vollauszug") zu fixieren. Es kann vorgesehen sein, dass im Falle des Vollauszuges eine hintere Schnittstelle der Trägereinheit, insbesondere eines Rangierfeldes, für den Servicetechniker zumindest teilweise zugänglich und im Falle des Teilauszuges noch verdeckt bzw. unzugänglich ist.

In der Zwischenposition lassen sich vorzugsweise die faseroptischen Module oder andere Bestandteile der Trägereinheit komfortabel austauschen oder zumindest inspizieren.

Auch ein Kippen bzw. Verschwenken der Trägereinheit oder eines Teils der Trägereinheit kann vorgesehen sein (im teilausgezogenen und/oder vollausgezogenen Zustand). Die Trägereinheit kann hierzu eine Gelenkverbindung, insbesondere ein Scharnier, aufweisen.

Vorzugsweise ist zumindest in einer vollausgezogenen Position eine mechanische Fixierung vorgesehen um sicherzustellen, dass die Trägereinheit nicht unbeabsichtigt vollständig aus der Schienenanordnung bzw. aus dem Verteilerrahmen entnommen wird bzw. herausfallen kann. Auch eine Fixierung in einer teilausgezogenen Position kann allerdings vorteilhaft sein, um eine für die meisten Anwendungen ausreichende Zugänglichkeit zu der Trägereinheit zu gewähren, die Wartungsposition zu stabilisieren und dem Servicetechniker aufzuzeigen, dass ein weiterer Auszug womöglich nicht erforderlich ist. Grundsätzlich kann eine beliebige Anzahl diskreter Auszugspositionen vorgesehen sein, also insbesondere auch mehrere teilausgezogene Positionen.

In einer vorteilhaften Ausgestaltung der Erfindung kann vorgesehen sein, dass die Fixierungsanordnung einen zumindest abschnittsweise federelastischen Rasthebel und eine Rastausnehmung oder einen Rücksprung für den Rasthebel aufweist, um eine lösbare Fixierung der Auszugsposition oder der Betriebsposition der Trägereinheit zwischen den beiden Montageschienen bereitzustellen.

Die erste Fixiereinheit kann somit beispielsweise als Rasthebel und die zweite Fixiereinheit als Rastausnehmung oder Rücksprung für den Rasthebel ausgebildet sein. Eine lösbare Fixierung der Auszugsposition ist grundsätzlich bevorzugt. Somit kann der Servicetechniker die Trägereinheit bewusst in die entsprechend gewünschte Auszugsposition verbringen und im Zweifel durch Aufbringen einer definierten, weiter erhöhten Zug- oder Druckkraft in oder entgegen der Auszugsrichtung der Trägereinheit weiterbewegen und/oder die Position der Trägereinheit durch Betätigen des Rasthebels entriegeln oder verriegeln.

Alternativ oder zusätzlich zu einer mechanischen Rastverbindung können grundsätzlich beliebige kraft- oder formschlüssige Fixierungsmechanismen vorgesehen sein, beispielsweise auch eine magnetische Fixierung. Beispielsweise können mehrere magnetische Rastpunkte entlang der Längsachse der Montageschiene verteilt sein (z. B. durch Verteilung von Permanentmagneten entlang der Funktionskomponente), die mit einem oder mehreren magnetischen Gegenrastpunkten auf der zugeordneten Seitenfläche der Trägereinheit entsprechend wechselwirken.

Die Erfindung betrifft außerdem eine Schienenbaugruppe, aufweisend mehrere Schienenanordnungen gemäß den vorstehenden und nachfolgenden Ausführungen.

Die Schienenanordnungen der Schienenbaugruppe sind vorzugsweise in der Art eines Stapels angeordnet und besonders bevorzugt mechanisch miteinander verbunden, beispielsweise mittels der vorstehend und nachfolgend beschriebenen Verbindungseinrichtungen.

Die Erfindung betrifft auch ein faseroptisches Verteilersystem, aufweisend einen Verteilerrahmen und eine oder mehrere Trägeranordnungen gemäß den vorstehenden und nachfolgenden Ausführungen. Insofern mehrere Trägeranordnungen innerhalb des Verteilerrahmens vorgesehen sind, sind diese in dem Verteilerrahmen vorzugsweise in verschiedenen Höhenlagen befestigt und/oder in einer hängenden Anordnung in dem Verteilerrahmen angeordnet.

Es kann vorgesehen sein, zwei, drei, vier, fünf, sechs, sieben, acht, neun, zehn, zwanzig, dreißig, vierzig, fünfzig oder noch mehr Trägeranordnungen in verschiedenen Höhenlagen, vorzugsweise unmittelbar übereinander, in einem gemeinsamen Verteilerrahmen zu montieren. Insbesondere kann ein solcher Stapel aus mehreren Trägeranordnungen (Register) bzw. die Schienenbaugruppe sukzessive aufgebaut werden. Der Verteilerrahmen kann beliebig mit Trägereinheit, insbesondere Rangierfeldern bzw. Trägeranordnungen, bestückt werden.

Durch die geringe Bauhöhe der Montageschienen bzw. Trägeranordnungen kann sich eine sehr feine Höhenunterteilung ergeben, wobei einzelne Trägereinheiten für andere Trägereinheiten als Abdeckung fungieren können, um den Zugang in die faseroptische Infrastruktur im nicht ausgezogenen Zustand auf das Nötigste zu begrenzen, sowie um Staub und Verschmutzungen abhalten.

Optional kann für die oberste Trägereinheit bzw. die oberste Trägeranordnung des Stapels / der Schienenbaugruppe ein separater Deckel bzw. eine separate Abdeckung (z. B. ein Blech) oder eine Dummy-Trägereinheit bzw. ein Dummy-Rangierfeld vorgesehen sein. Grundsätzlich kann ein Deckel bzw. eine separate Abdeckung, insbesondere ein Blech, für eine beliebige Trägereinheit des Stapels vorgesehen sein, also nicht zwingend nur für die oberste Trägereinheit.

Auf vorteilhafte Weise können standardisierte Trägereinheiten unterschiedlicher Funktionalität (beispielsweise Modulträger, Kabelmanagementsysteme, Aufbewahrungslösungen oder Beschriftungsfelder) beliebig miteinander im Gesamtverbund in einem gemeinsamen Verteilerrahmen kombiniert und selbst nach der Montage im Verteilerrahmen unabhängig voneinander getauscht und modifiziert werden. Auf diese Weise kann äußerst gezielt auf Kundenanfragen eingegangen werden, ohne für den jeweiligen Anwendungsfall ein individuelles Produkt produzieren zu müssen.

Vorzugsweise weisen weder die Schienenanordnung, die Trägeranordnung, der Verteilerrahmen oder das faseroptische Verteilersystem ein Trägergehäuse auf. Ein Rangierfeld ohne Trägergehäuse wird mitunter auch als Einschubfach ("Tray") bezeichnet.

Die Erfindung betrifft außerdem auch einen Verteilerrahmen, aufweisend wenigstens eine Schienenanordnung gemäß den vorstehenden und nachfolgenden Ausführungen. Insofern mehrere Schienenanordnungen vorgesehen sind, sind diese vorzugsweise in dem Verteilerrahmen in verschiedenen Höhenlagen befestigt.

Auf die vorgeschlagene Weise können aufgrund der nur sehr geringen Bauteilhöhe der Schienenanordnungen die Standardhöhen von 1/3 HE ausgenutzt werden, was den nutzbaren Bauraum im Verteilerrahmen optimiert. Dies ist bei den im Stand der Technik verwendeten Trägergehäusen nicht möglich, da diese als kleinste Höhenvarianten zwingend eine Höheneinheit oder ganzzahlige Vielfache einer Höheneinheit einsetzen müssen.

Die Erfindung betrifft auch eine Verwendung einer Schienenanordnung, die eine erste Montageschiene und eine separate zweite Montageschiene aufweist, in einem Verteilerrahmen zur bewegbaren Führung einer Trägereinheit.

Merkmale, die im Zusammenhang mit einem der Gegenstände der Erfindung, namentlich gegeben durch die erfindungsgemäße Schienenanordnung, die erfindungsgemäße Trägeranordnung, die erfindungsgemäße Schienenbaugruppe, das erfindungsgemäße faseroptische Verteilersystem, den erfindungsgemäßen Verteilerrahmen und die erfindungsgemäße Verwendung, beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

An dieser Stelle sei erwähnt, dass die in den abhängigen Ansprüchen genannten, spezifischen Merkmalskombinationen auch für sich genommen eigenständige Erfindungen im Rahmen des beanspruchten erfindungsgemäßen Gesamtkonzepts darstellen können. Die Anmelderin behält sich explizit vor, Merkmale der abhängigen Patentansprüche auch unabhängig von den unabhängigen Patentansprüchen zu beanspruchen, insbesondere für beliebige Montageschienen für eine Trägereinheit, also insbesondere auch für eine erste Montageschiene und eine zweite Montageschiene, die miteinander mechanisch verbunden und nicht zwingend separat ausgeführt sind, beispielsweise auch in Kombination mit einem Trägergehäuse. Die weiteren Ansprüche, Anspruchsmerkmale und die in der gesamten Beschreibung und Zeichnung offenbarten Merkmale betreffen vorteilhafte Ausführungsformen und Varianten der oben genannten, unabhängigen Erfindungen.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine Trägeranordnung mit einer Schienenanordnung und einem Rangierfeld gemäß einem ersten Ausführungsbeispiel, in einem ausgezogenen Zustand des Rangierfeldes;
- Figur 2: die Trägeranordnung der Figur 1 in einem eingeschobenen Zustand des Rangierfeldes;
- Figur 3: eine erfindungsgemäße Variante einer Montageschiene einer Schienenanordnung mit einem im Wesentlichen starren Bewegungsbegrenzungsmittel;
- Figur 4: eine weitere erfindungsgemäße Variante einer Montageschiene für eine Trägeranordnung mit einer magnetischen Fixierungsanordnung;
- Figur 5: eine Trägeranordnung mit einer Schienenanordnung und einem Rangierfeld gemäß einem zweiten Ausführungsbeispiel, in einem ausgezogenen Zustand des Rangierfeldes;
- Figur 6: eine Detailansicht einer zweiteiligen Montageschiene mit einer Verbindungseinrichtung zur Verbindung mit einer weiteren (nicht dargestellten) Montageschiene einer weiteren Schienenanordnung;
- Figur 7: einen Stapel mehrerer Trägeranordnungen, die über jeweilige Verbindungseinrichtungen gemäß den Figuren 5 und 6 miteinander verbunden sind;
- Figur 8: eine Schnittdarstellung durch die mechanischen Verbindungen der Verbindungseinrichtungen der Figur 7;
- Figur 9: die Trägeranordnung der Figur 5 in einer teilausgezogenen Position des Rangierfeldes;
- Figur 10: die Trägeranordnung der Figur 5 in einer vollausgezogenen Position des Rangierfeldes;
- Figur 11: eine weitere erfindungsgemäße Variante einer Montageschiene für eine Trägeranordnung mit einem lösbaren bzw. verrastbaren Bewegungsbegrenzungsmittel;
- Figur 12: eine Trägeranordnung mit einem schwenkbaren Rangierfeld gemäß einem dritten Ausführungsbeispiel, in einem teilausgezogenen Zustand des Rangierfeldes;
- Figur 13: einen Verteilerrahmen gemäß einem Ausführungsbeispiel mit mehreren, in verschiedenen Höhenlagen angeordneten Schienenanordnungen; und
- Figur 14: ein faseroptisches Verteilersystem gemäß einem Ausführungsbeispiel, aufweisend einen Verteilerrahmen und mehrere, in verschiedenen Höhenlagen angeordnete Trägeranordnungen.

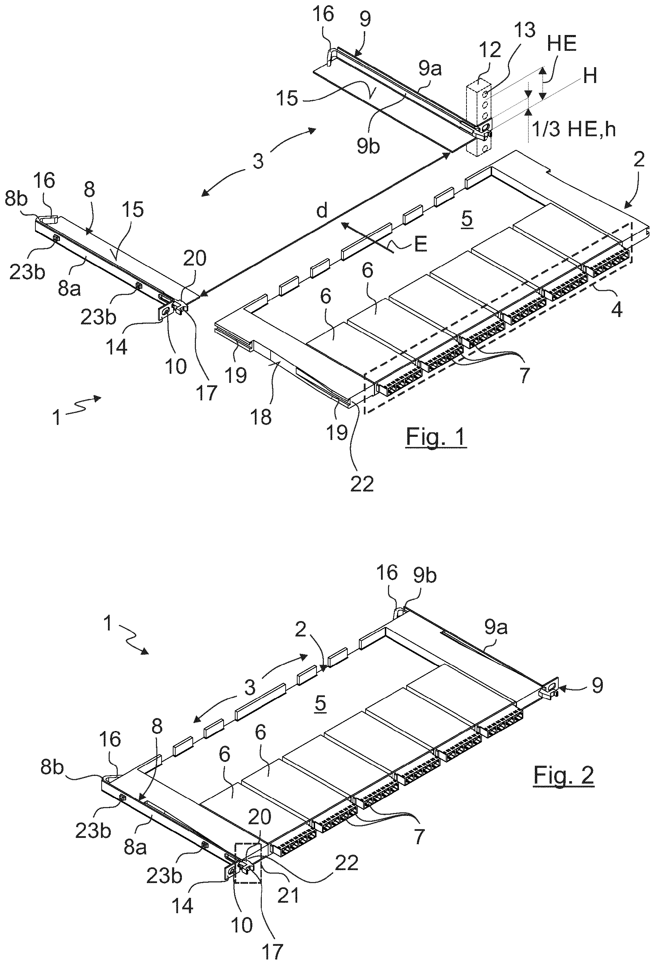

Die Figuren 1 und 2 zeigen eine Trägeranordnung 1 gemäß einem ersten Ausführungsbeispiel der Erfindung mit einer Trägereinheit 2 und einer Schienenanordnung 3 für die Trägereinheit 2, wobei die Trägereinheit 2 in Figur 1 in einem vollständig ausgezogenen Zustand und in Figur 2 in einem vollständig eingeschobenen Zustand dargestellt ist. In den Ausführungsbeispielen sind die Trägereinheiten jeweils als Rangierfelder 2 ausgebildet, was allerdings nicht einschränkend zu verstehen ist. Die Schienenanordnung 3 kann sich grundsätzlich zu Verwendung mit beliebigen Trägereinheiten eignen, insbesondere auch zur Verwendung mit Schubfächern oder Dummy-Elementen.

Das Rangierfeld 2 weist ein vorderes Interface bzw. Anschlussfeld 4 und eine hintere Schnittstelle 5 auf. Im Bereich des vorderen Anschlussfeldes 4 sind mehrere Kassetten 6 angeordnet, die jeweils optische und/oder optisch-elektrische Steckverbinder 7 aufweisen können. Rangierfelder 2 sind grundsätzlich bekannt und in vielen verschiedenen Varianten verfügbar, weshalb auf nähere Details vorliegend nicht eingegangen wird.

Die Schienenanordnung 3 weist eine erste Montageschiene 8 und eine separate zweite Montageschiene 9 auf. Die beiden Montageschienen 8, 9 sind voneinander beabstandet (vgl. Abstand d in Figur 1 entlang eines ersten Translationsfreiheitsgrades) und ausgebildet, das Rangierfeld 2 gemeinsam zwischeneinander aufzunehmen.

In den Ausführungsbeispielen ist die Schienenanordnung 3 ausgebildet, um das Rangierfeld 2 entlang und entgegen einer Einschubrichtung E (bzw. entlang eines zweiten Translationsfreiheitsgrades orthogonal zu dem ersten Translationsfreiheitsgrad) bewegbar zu führen.

Die erste Montageschiene 8 und die zweite Montageschiene 9 weisen in den Ausführungsbeispielen jeweils denselben strukturellen Aufbau auf, sind jedoch zueinander spiegelsymmetrisch ausgebildet und angeordnet.

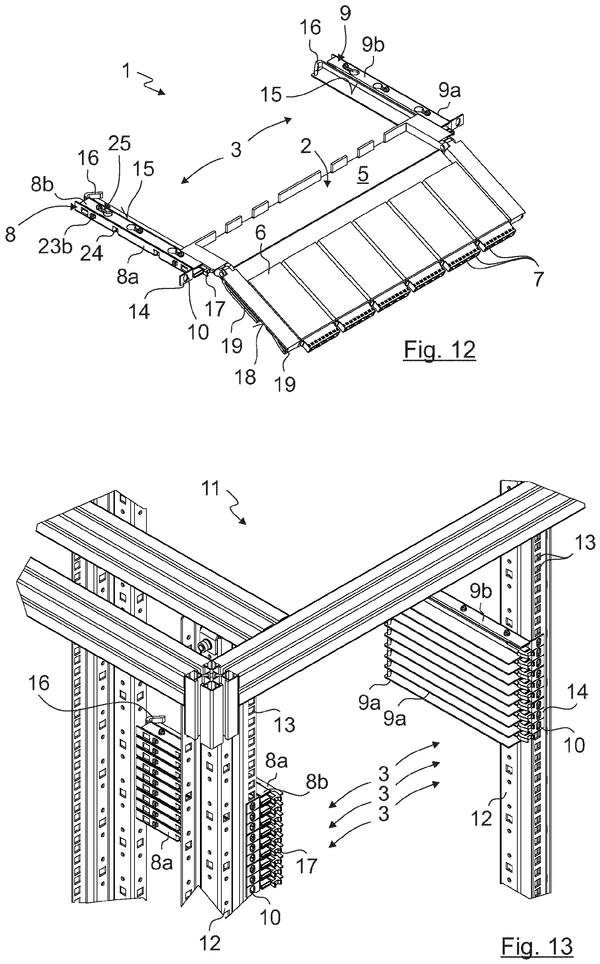

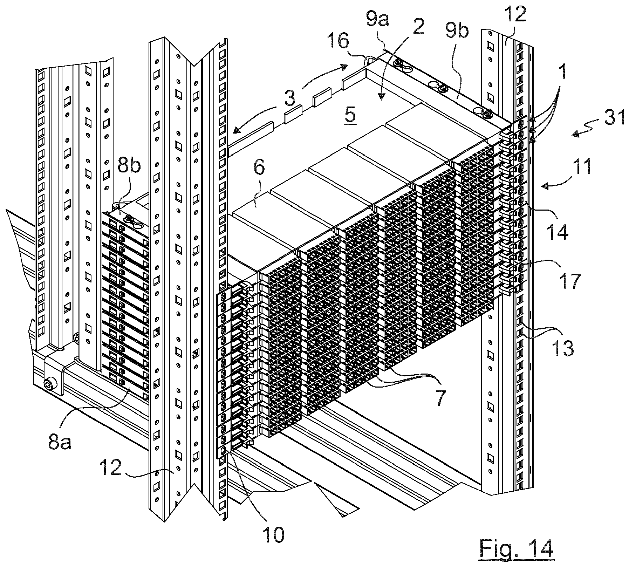

Jede der Montageschienen 8, 9 weist wenigstens einen Befestigungspunkt 10 zur Befestigung an einem Verteilerrahmen 11 (vgl. Figuren 13 und 14) auf. In Figur 1 ist beispielhaft eine einzelne Vertikalstrebe 12 des Verteilerrahmens 11 mit jeweiligen Befestigungspositionen 13 strichliniert angedeutet. Die Befestigungspunkte 10 sind jeweils an einem umgebogenen, seitlichen Abschnitt 14 (eine Fahne) der jeweiligen Montageschiene 8, 9 angeordnet und zur Schaffung einer Ausgleichsmöglichkeit für Toleranzen als Langlochbohrungen ausgebildet. Die Befestigungspunkte 10 bzw. Langlochbohrungen können schließlich fluchtend zu den gewünschten Befestigungspositionen 13 des Verteilerrahmens 11 bzw. der entsprechenden Vertikalstrebe 12 des Verteilerrahmens 11 angeordnet werden, so dass die erste Montageschiene 8 und die zweite Montageschiene 9 vorzugsweise in dem Verteilerrahmen in derselben Höhenlage H angeordnet sind.

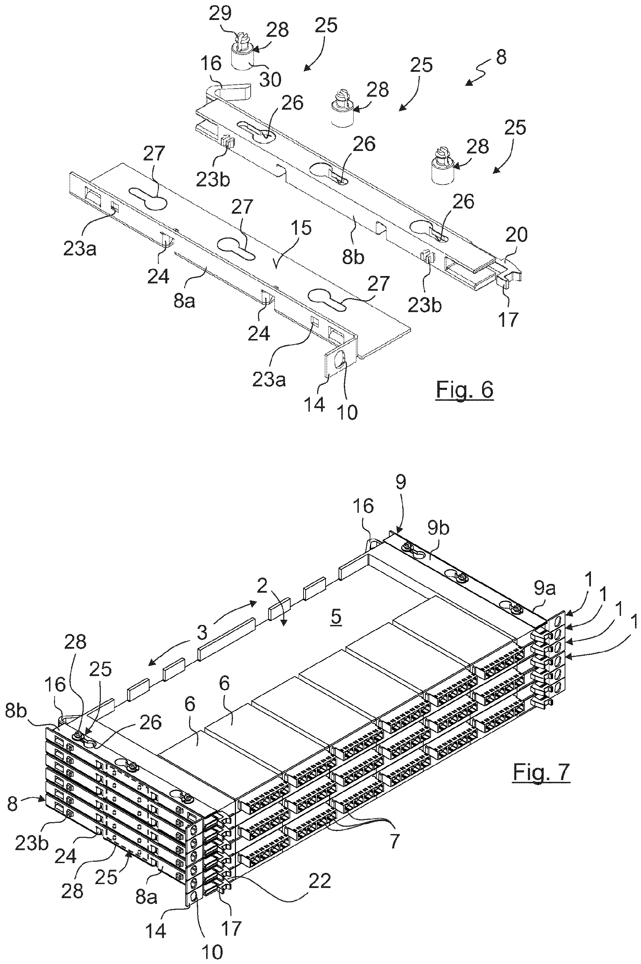

In der Regel sind die Höhenlagen H bzw. Befestigungspunkte 10 des Verteilerrahmens 11 in einem definierten Raster angeordnet und jeweils um ein Drittel einer Höheneinheit HE voneinander beabstandet. Vorzugsweise ist die Bauhöhe h (bezogen auf einen zu den ersten beiden Translationsfreiheitsgraden orthogonalen, dritten Translationsfreiheitsgrad) der ersten Montageschiene 8 und der zweiten Montageschiene 9 bzw. der gesamten Trägeranordnung 1 derart gewählt, dass diese ein Drittel einer Höheneinheit HE nicht überschreitet, so dass ein möglichst kompakter Stapel ("Register") mehrerer Trägeranordnungen 1 in dem gemeinsamen Verteilerrahmen 11 angeordnet werden kann. Entsprechende Stapel von Trägeranordnungen 1, die im Rahmen der Erfindung auch als "Schienenbaugruppen" bezeichnet werden, sind beispielsweise in den Figuren 7 und 14 dargestellt. Insbesondere kann auf ein Trägergehäuse für das oder die Rangierfelder 2 verzichtet werden, wodurch eine höhere Rangierfelddichte in dem Verteilerrahmen 11 erreichbar ist. Gemäß dem Stand der Technik ist eine Befestigung bzw. Beabstandung in der Regel lediglich in ganzzahligen Vielfachen einer Höheneinheit HE realisierbar.

An dieser Stelle sei angemerkt, dass anwendungsbedingt auch mehrere Einschubrichtungen E für eine Trägereinheit bzw. ein Rangierfeld 2 vorgesehen sein können, insbesondere eine erste Einschubrichtung und eine der ersten Einschubrichtung entgegengesetzte, zweite Einschubrichtung (beispielsweise, wenn im montierten Zustand der Schienenanordnung 3 in dem Verteilerrahmen 11 eine Zugangsmöglichkeit für den Servicetechniker von entgegengesetzten Seiten, also z. B. von vorne und hinten, gewährleitet werden soll, um dem Servicetechniker ein Aus- und Einschieben der Trägereinheit bzw. des Rangierfeldes 2 von beiden Seiten des Verteilerrahmens 11 zu ermöglichen). Zum einfacheren Verständnis wird die Erfindung vorliegend allerdings im Wesentlichen mit genau einer Einschubrichtung beschrieben, wie auch in Figur 1 dargestellt, was allerdings nicht einschränkend zu verstehen ist.

Die Montageschienen 8, 9 sind in allen Ausführungsbeispielen mehrteilig ausgebildet, was allerdings grundsätzlich nicht einschränkend zu verstehen ist. In den Ausführungsbeispielen weist jede der Montageschienen 8, 9 eine Profilschiene 8a, 9a auf (vorzugsweise eine aus einem Blech gefertigte, vornehmlich L-förmige Profilschiene 8a, 9a) und eine mechanisch starr und unmittelbar auf der Profilschiene 8a, 9a befestigte Funktionskomponente 8b, 9b. Die Profilschiene 8a, 9a bildet eine entlang des zweiten Translationsfreiheitsgrades y verlaufende Auflagefläche 15 für das Rangierfeld 2 aus.

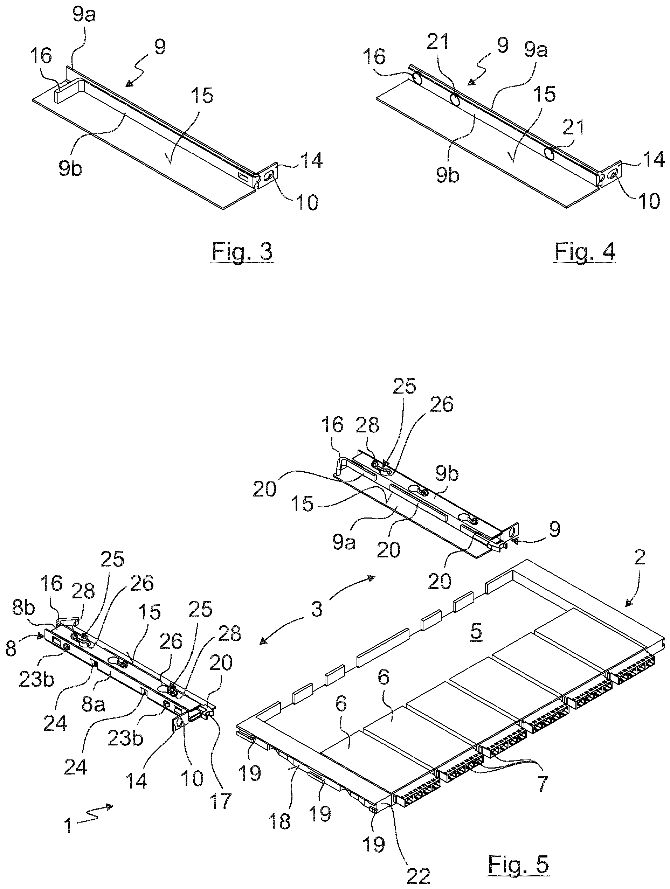

Die Montageschienen 8, 9 in dem Ausführungsbeispiel der Figuren 1 und 2 weisen jeweils ein rückseitiges Bewegungsbegrenzungsmittel 16 auf, um die Bewegung des Rangierfeldes 2 entlang der Einschubrichtung E zu begrenzen. In dem in Figur 1 und 2 dargestellten Ausführungsbeispiel handelt es sich dabei um elastische Bewegungsbegrenzungsmittel 16, wodurch der Servicetechniker beim Herausschieben des Rangierfeldes 2 aus der Schienenanordnung 3 zusätzlich unterstützt wird. Alternativ zu einem elastischen Bewegungsbegrenzungsmittel 16 kann allerdings auch ein starres Bewegungsbegrenzungsmittel 16 vorgesehen sein, wie in Figur 3 dargestellt, oder ein magnetisches Bewegungsbegrenzungsmittel 16 (vgl. Figur 4). In den Ausführungsbeispielen ist das Bewegungsbegrenzungsmittel 16 jeweils an der Funktionskomponente 8b, 9b ausgebildet.

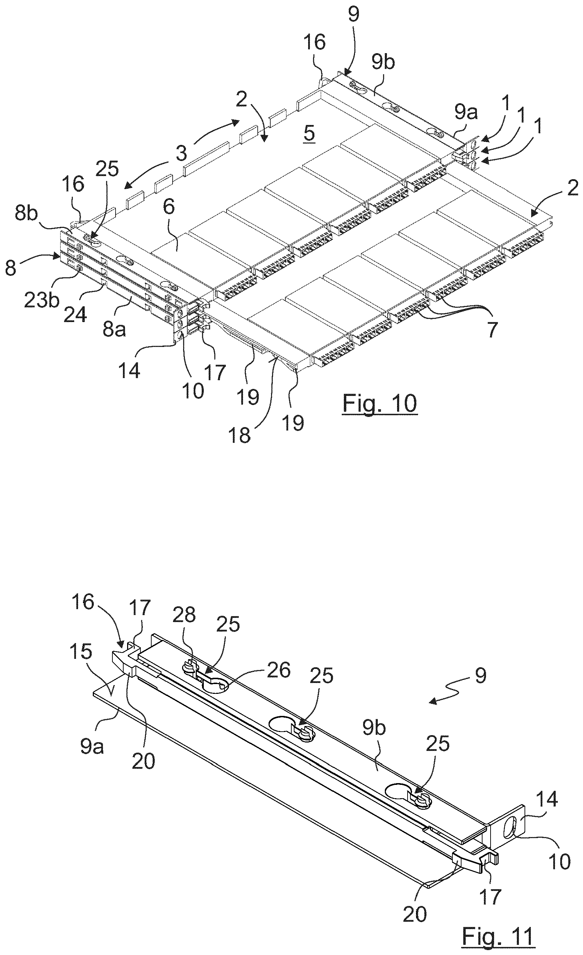

Anhand von Figur 11 soll außerdem verdeutlicht werden, dass ein unüberwindbares Bewegungsbegrenzungsmittel 16 im Sinne der Erfindung nicht unbedingt erforderlich ist. Grundsätzlich kann auch ein überwindbares Bewegungsbegrenzungsmittel 16 vorgesehen sein, um die Möglichkeit bereitzustellen, das Rangierfeld 2 rückseitig aus der Schienenanordnung 3 herauszuziehen, wenn eine gewisse Kraftkomponente überwunden wird oder ein entsprechender Rasthebel 17 entriegelt wird. Somit kann die Zugänglichkeit und Montierbarkeit für den Servicetechniker weiter vereinfacht sein.

Um die Führung des Rangierfeldes 2 entlang der Schienenanordnung 3 weiter zu verbessern, kann zwischen zumindest einer der beiden Montageschienen 8, 9 und einer Seitenfläche 18 des Rangierfeldes 2 ein Linearführungspaar ausgebildet sein, wobei ein erster Verbindungspartner 19 des Linearführungspaars als Führungsnut und ein zweiter Verbindungspartner 20 des Linearführungspaars als korrespondierender Nutenstein ausgebildet ist. In den Ausführungsbeispielen ist der Nutenstein bzw. der zweite Verbindungspartner 20 jeweils an der Funktionskomponente 8b, 9b ausgebildet.

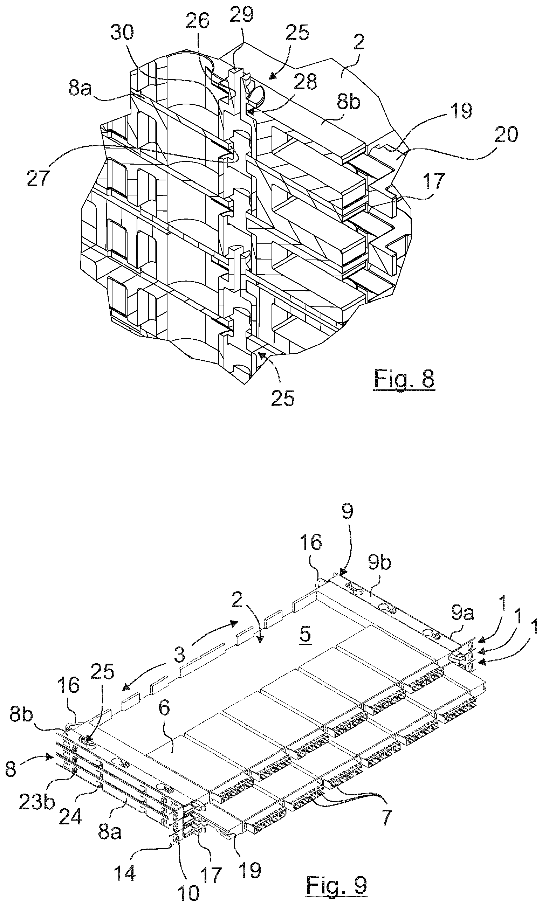

Ergänzend zu dem bereits beschriebenen Bewegungsbegrenzungsmittel 16 kann außerdem zwischen zumindest einer der beiden Montageschienen 8, 9 und einer Seitenfläche 18 des Rangierfeldes 2 eine Fixierungsanordnung 21 ausgebildet sein, um das Rangierfeld 2 entlang oder entgegen der Einschubrichtung E in zumindest einer Auszugsposition zu fixieren. So kann beispielsweise eine Fixierung in einer teilausgezogenen Position (vgl. Figur 9) oder in einer vollausgezogenen Position (vgl. Figur 10) möglich sein. Auch eine Fixierung in der Betriebsposition (vorliegend eine vollständig geschlossene Position, vgl. z. B. Figur 2) kann vorgesehen sein. Eine entsprechende Fixierungsanordnung 21 kann vorzugsweise unter Verwendung eines federelastischen Rasthebels 17 und einer Rastausnehmung oder eines Rücksprungs 22 für den Rasthebel 17 ausgebildet sein, um eine lösbare Fixierung der Auszugsposition des Rangierfeldes 2 zwischen den beiden Montageschienen 8, 9 bereitzustellen. Auch eine magnetische Fixierungsanordnung 21 (vgl. Figur 4) kann grundsätzlich möglich sein. In den Ausführungsbeispielen ist der Rasthebel 17 jeweils an der Funktionskomponente 8b, 9b ausgebildet.

In den Ausführungsbeispielen sind die Nutensteine bzw. zweiten Verbindungspartner 20 jeweils einteilig mit dem Rasthebel 17 der Fixierungsanordnung 21 der Montageschiene 8, 9 zur Entriegelung der Linearführung ausgebildet.

An dieser Stelle sei erwähnt, dass sich das Linearführungspaar, also beispielsweise die Kombination aus Führungsnut bzw. erster Verbindungspartner 19 und Nutenstein bzw. zweiter Verbindungspartner 20, optional auch über die vollständige Länge der Seitenfläche 18 des Rangierfeldes 2 und/oder die vollständige Länge der Montageschiene 8, 9 erstrecken kann, auch wenn dies in der Ausführungsbeispielen nicht dargestellt ist.

Die Erfindung eignet sich auch besonders vorteilhaft zur Verwendung mit schwenkbaren bzw. umklappbaren Rangierfeldern 2, wie in Figur 12 dargestellt. Somit kann wahlweise in der teilausgezogenen oder vollausgezogenen Position des Rangierfeldes 2 ein Umklappen erfolgen, um die Zugänglichkeit weiter zu verbessern.

Die mehrteiligen Montageschienen 8, 9 können vorzugsweise eine Rastverbindung zwischen der Profilschiene 8a, 9a und der korrespondierenden Funktionskomponente 8b, 9b aufweisen. Die Profilschiene 8a, 9a weist hierzu mehrere Verbindungselemente (im Ausführungsbeispiel Rastausnehmungen 23a) und die Funktionskomponente 8b, 9b mehrere entsprechend korrespondierende Verbindungselemente (im Ausführungsbeispiel Rastelemente 23b) auf, um eine mechanisch stabile und bedarfsweise demontierbare Verbindung zwischen der Profilschiene 8a, 9a und der Funktionskomponente 9a, 9b herzustellen.

Anhand der Figuren 5 bis 10 soll nachfolgend eine Möglichkeit zur mechanischen Versteifung der Trägeranordnung 1 vorgestellt werden. Insbesondere wenn mehrere Rangierfelder 2 aufeinandergestapelt montiert werden sollen, kann es vorteilhaft sein, die jeweiligen Montageschienen 8, 9 mechanisch zu verstärken. Hierzu können einerseits Umkantungen 24 entlang der Längsachse vorgesehen sein (vgl. insbesondere der Figuren 5 und 6). Alternativ oder ergänzend kann vorgesehen sein, dass die Montageschienen 8, 9 jeweils wenigstens eine Verbindungseinrichtung 25 aufweisen (vgl. beispielsweise Figur 6). In den Ausführungsbeispielen sind beispielhaft jeweils drei Verbindungseinrichtungen 25 vorgesehen. Die Verbindungseinrichtungen 25 sind jeweils ausgebildet, die jeweilige Montageschiene 8, 9 mit einer oberhalb und/oder unterhalb angeordneten, unmittelbar benachbarten weiteren Montageschiene 8, 9 mechanisch zu verbinden.

Die Montageschiene 8, 9 weist pro Verbindungseinrichtung 25 jeweils eine oberseitige Verbindungsausnehmung 26 und eine unterseitige Verbindungsausnehmung 27 auf, die jeweils zueinander fluchtend angeordnet sind (vgl. Schnittdarstellung in Figur 8). Die oberseitige Verbindungsausnehmung 26 ist in den Ausführungsbeispielen in den Funktionskomponenten 8b, 9b und die unterseitige Verbindungsausnehmung 27 in der Profilschiene 8a, 9b ausgebildet. Die Verbindungsausnehmungen 26, 27 sind jeweils als Kombination aus Durchgangsbohrung und Langloch realisiert. Zur Verbindung der Montageschienen 8, 9 ist jeweils ein Verbindungsmittel 28 vorgesehen, das als separates Verbindungsglied ausgebildet ist, das mit zumindest einem ersten Endabschnitt 29 in einer der Verbindungsausnehmungen 26, 27 montierbar und zusätzlich mit der jeweils anderen Verbindungsausnehmung 27, 26 einer angrenzenden Schienenanordnung 3 verrastbar ist. Der verrastende, erste Endabschnitt 29 vermag sich somit nach dem Eindringen in den gegenüberliegenden Verbindungspartner aufzuspreizen, wodurch ein Formschluss bereitgestellt werden kann. Werden also mehrere Montageschienen 8, 9 zu einem Stapel / zu einer Schienenbaugruppe bzw. zu einem Register zusammengeschlossen, so greift das Verbindungsglied bzw. das Verbindungsmittel 28 aus einer Funktionskomponente 8b, 9b in das Grundprofil der darüberliegenden Montageschiene 8, 9 ein und spreizt auf. Die Verbindung schafft eine erhöhte mechanische Stabilität des Gesamtverbundes und verhindert, dass sich das Rangierfeld 2 bei Vollbestückung durchbiegt oder verzieht. Das Verbindungsglied bzw. Verbindungsmittel 28 kann an einem zweiten Endabschnitt 30 vorzugsweise ausgebildet sein, den ersten Endabschnitt 29 eines Verbindungsgliedes bzw. Verbindungsmittels 28 einer benachbarten Schienenanordnung 3 in sich aufzunehmen (vgl. Figur 8).

Die vorgeschlagene Verbindungseinrichtung 25 eignet sich besonders vorteilhaft für eine eng beabstandete Anordnung von Rangierfeldern 2. Um zu gewährleisten, dass auch die oberste Einheit des gesamten Registers nicht mehr als 1/3 einer Höheneinheit HE beansprucht, können die Verbindungsglieder bzw. Verbindungsmittel 28 entnehmbar sein, da für die oberste Einheit des Stapels ein weiterführendes Verbindungsglied bzw. Verbindungsmittel 28 in der Regel nicht erforderlich ist - auf diese Weise kann der Bauraum weiter optimiert werden.

Optional können aber auch Abstandshalter vorgesehen sein (in den Figuren nicht dargestellt). Durch diese kann dem bei vielen Typen von Verteilerrahmen 11 auftretenden Versatz der Verschraubungspositionen in Abständen von einer Höheneinheit HE begegnet werden. Die Abstandshalter können als zusätzliche Komponente ausgeführt sein oder einteilig mit den Verbindungsgliedern 28 gebildet sein.

Auch alternative Variante einer Verbindungseinrichtung 25 sind im Rahmen der Erfindung möglich, wie beispielsweise ein platten- oder schienenförmig ausgebildetes Verbindungsmittel 28 (in Figur 7 beispielhaft strichliniert angedeutet), das an den Seitenflächen der zu verbindenden Montageschienen 8, 9 befestigbar ist. Das platten- oder schienenförmige Verbindungsmittel 28 und die Montageschienen 8, 9 können hierzu beispielsweise jeweilige Bohrungen aufweisen, um eine geeignete Schraub-, Rast- oder Steckverbindung zu ermöglichen.

In Figur 13 ist ein Verteilerrahmen 11 dargestellt, in dem mehrere Schienenanordnungen 3 angeordnet sind, um jeweilige Slots bzw. Einschübe für Rangierfelder 2 in verschiedenen Höhenlagen H in geringer Beabstandung zu realisieren. Auch eine vertikale oder schräge Anordnung ist allerdings möglich, wie bereits erwähnt. Die einzelnen Montageschienen 8, 9 der jeweiligen Schienenanordnungen 3 sind jeweils entsprechend mit den Vertikalstreben 12 der Verteilerrahmen 11 verbunden.

Schließlich zeigt Figur 14 ein faseroptisches Verteilersystem 31 mit dem Verteilerrahmen 11 und mehreren Trägeranordnungen 1. Die Anschlussdichte kann erfindungsgemäß außerordentlich groß sein, bei gleichzeitig guter Zugänglichkeit. Der Bauraum in dem Verteilerrahmen 11 kann nahezu optimal ausgenutzt werden.

## Patentansprüche

1. Schienenanordnung (3) für eine Trägereinheit (2) für eine faseroptische Komponente, insbesondere für ein Rangierfeld, aufweisend eine erste Montageschiene (8) und eine separate zweite Montageschiene (9), wobei die Montageschienen (8, 9) voneinander beabstandet und ausgebildet sind, die Trägereinheit (2) gemeinsam zwischeneinander aufzunehmen, und wobei jede der Montageschienen (8, 9) wenigstens einen Befestigungspunkt (10) zur Befestigung an einem Verteilerrahmen (11) aufweist.

2. Schienenanordnung (3) nach Anspruch 1,
**dadurch gekennzeichnet, dass**
die Montageschienen (8, 9) ausgebildet sind, die Trägereinheit (2) derart aufzunehmen, dass die Trägereinheit (2) entlang einer Einschubrichtung (E) bewegbar geführt ist.

3. Schienenanordnung (3) nach Anspruch 1 oder 2,
**dadurch gekennzeichnet, dass**
die Montageschienen (8, 9) jeweils eine Auflagefläche (15) für die Trägereinheit (2) aufweisen, auf der die zwischen den Montageschienen (8, 9) aufgenommene Trägereinheit (2) aufzuliegen vermag.

4. Schienenanordnung (3) nach einem der Ansprüche 1 bis 3,
**dadurch gekennzeichnet, dass**
die Bauhöhe der ersten Montageschiene (8) und der zweiten Montageschiene (9) jeweils kleiner ist als eine Höheneinheit (HE), vorzugsweise nicht über 2/3 einer Höheneinheit (HE) hinausgeht, besonders bevorzugt nicht über 1/3 einer Höheneinheit (HE) hinausgeht.

5. Schienenanordnung (3) nach Anspruch 4,
**dadurch gekennzeichnet, dass**
die Bauhöhe der ersten Montageschiene (8) und der zweiten Montageschiene (9) jeweils nicht über (n-1)/n einer Höheneinheit hinausgeht, vorzugsweise nicht über 1/n einer Höheneinheit hinausgeht, wobei n einer natürlichen Zahl größer 1 entspricht.

6. Schienenanordnung (3) nach einem der Ansprüche 1 bis 5,
**dadurch gekennzeichnet, dass**
die erste Montageschiene (8) und die zweite Montageschiene (9) jeweils Mittel zur Erhöhung der mechanischen Steifigkeit aufweisen, beispielsweise:
- eine oder mehrere entlang der Längserstreckung der Montageschiene (8, 9) ausgebildete Umkantungen (24), Verstrebungen und/oder Materialverstärkungen; und/oder
- einen Materialverbund aus zumindest zwei Grundmaterialien.

7. Schienenanordnung (3) nach einem der Ansprüche 1 bis 6,
**gekennzeichnet durch**
wenigstens eine Verbindungseinrichtung (25), um die erste Montageschiene (8) oder die zweite Montageschiene (9) mit zumindest einer benachbarten, weiteren Montageschiene (9, 8) einer weiteren Schienenanordnung (3) mechanisch zu verbinden.

8. Schienenanordnung (3) nach Anspruch 7,
**dadurch gekennzeichnet, dass**
die Verbindungseinrichtung (25) wenigstens ein unmittelbar an den zu verbindenden benachbarten Montageschienen (8, 9) befestigbares Verbindungsmittel (28) aufweist, wobei das Verbindungsmittel (28) vorzugsweise mit den jeweiligen Montageschienen (8, 9) verschraubbar, verrastbar und/oder verpressbar ist.

9. Schienenanordnung (3) nach einem der Ansprüche 2 bis 8,
**dadurch gekennzeichnet, dass**
die erste Montageschiene (8) und/oder die zweite Montageschiene (9) ein vorderseitiges oder rückseitiges Bewegungsbegrenzungsmittel (16) aufweist, um die Bewegung der Trägereinheit (2) entlang der Einschubrichtung (E) oder entgegen der Einschubrichtung (E) zu begrenzen, vorzugsweise elastisch zu begrenzen.

10. Schienenanordnung (3) nach Anspruch 9,
**dadurch gekennzeichnet, dass**
das Bewegungsbegrenzungsmittel (16) ausgebildet ist, die Bewegung der Trägereinheit (2) ausschließlich entlang der Einschubrichtung (E) oder entgegen der Einschubrichtung (E) zu begrenzen und in der entgegengesetzten Richtung passieren zu lassen, um eine Montagemöglichkeit für die Trägereinheit (2) bereitzustellen, vorzugsweise indem das Bewegungsbegrenzungsmittel (16) vorübergehend und zerstörungsfrei von der Trägereinheit (2) umbiegbar ist.

11. Schienenanordnung (3) nach einem der Ansprüche 1 bis 10,
**dadurch gekennzeichnet, dass**
der Befestigungspunkt (10) der ersten Montageschiene (8) und/oder der zweiten Montageschiene (9) an einem Endabschnitt der jeweiligen Montageschiene (8, 9) angeordnet und vorzugsweise als Langlochbohrung ausgebildet ist.

12. Schienenanordnung (3) nach einem der Ansprüche 1 bis 11,
**dadurch gekennzeichnet, dass**
die erste Montageschiene (8) und die zweite Montageschiene (9) denselben strukturellen Aufbau aufweisen, jedoch zueinander spiegelsymmetrisch ausgebildet und angeordnet sind.

13. Trägeranordnung (1), aufweisend eine Trägereinheit (2), insbesondere ein Rangierfeld, und eine Schienenanordnung (3) für die Trägereinheit (2) gemäß einem der Ansprüche 1 bis 12, wobei die Trägereinheit (2) zwischen den beiden Montageschienen (8, 9) aufgenommen ist.

14. Trägeranordnung (1) nach Anspruch 13,
**dadurch gekennzeichnet, dass**
zwischen zumindest einer der beiden Montageschienen (8, 9) und einer Seitenfläche (18) der Trägereinheit (2) ein Linearführungspaar ausgebildet ist, wobei vorzugsweise ein erster Verbindungspartner (19) des Linearführungspaares als Führungsnut und ein zweiter Verbindungspartner (20) des Linearführungspaares als korrespondierender Nutenstein ausgebildet ist.

15. Trägeranordnung (1) nach Anspruch 13 oder 14,
**dadurch gekennzeichnet, dass**
zwischen zumindest einer der beiden Montageschienen (8, 9) und einer Seitenfläche (18) der Trägereinheit (2) eine Fixierungsanordnung (21) ausgebildet ist, um die Trägereinheit (2) entlang oder entgegen der Einschubrichtung (E) in zumindest einer Auszugsposition und/oder in einer Betriebsposition zu fixieren.

16. Faseroptisches Verteilersystem (31), aufweisend einen Verteilerrahmen (11) und mehrere Trägeranordnungen (1) gemäß einem der Ansprüche 13 bis 15, die in dem Verteilerrahmen (11) befestigt sind, vorzugsweise in verschiedenen Höhenlagen (H) befestigt sind.

## Geänderte Patentansprüche

### Geänderte Patentansprüche gemäss Regel 137(2) EPÜ.

1. Schienenanordnung (3) für eine Trägereinheit (2) für eine faseroptische Komponente, insbesondere für ein Rangierfeld, aufweisend eine erste Montageschiene (8) und eine separate zweite Montageschiene (9), wobei die Montageschienen (8, 9) voneinander beabstandet und ausgebildet sind, die Trägereinheit (2) gemeinsam zwischeneinander aufzunehmen, und wobei jede der Montageschienen (8, 9) wenigstens einen Befestigungspunkt (10) zur Befestigung an einem Verteilerrahmen (11) aufweist,
**dadurch gekennzeichnet, dass**
jede der Montageschienen (8, 9) eine L-förmige Profilschiene (8a, 9a) aufweist, insbesondere ein L-förmig gebogenes Blechprofil.

2. Schienenanordnung (3) nach Anspruch 1,
**dadurch gekennzeichnet, dass**
die Montageschienen (8, 9) ausgebildet sind, die Trägereinheit (2) derart aufzunehmen, dass die Trägereinheit (2) entlang einer Einschubrichtung (E) bewegbar geführt ist.

3. Schienenanordnung (3) nach Anspruch 1 oder 2,
**dadurch gekennzeichnet, dass**
die Montageschienen (8, 9) jeweils eine Auflagefläche (15) für die Trägereinheit (2) aufweisen, auf der die zwischen den Montageschienen (8, 9) aufgenommene Trägereinheit (2) aufzuliegen vermag.

4. Schienenanordnung (3) nach einem der Ansprüche 1 bis 3,
**dadurch gekennzeichnet, dass**
die Bauhöhe der ersten Montageschiene (8) und der zweiten Montageschiene (9) jeweils kleiner ist als eine Höheneinheit (HE), vorzugsweise nicht über 2/3 einer Höheneinheit (HE) hinausgeht, besonders bevorzugt nicht über 1/3 einer Höheneinheit (HE) hinausgeht.

5. Schienenanordnung (3) nach Anspruch 4,
**dadurch gekennzeichnet, dass**
die Bauhöhe der ersten Montageschiene (8) und der zweiten Montageschiene (9) jeweils nicht über (n-1)/n einer Höheneinheit hinausgeht, vorzugsweise nicht über 1/n einer Höheneinheit hinausgeht, wobei n einer natürlichen Zahl größer 1 entspricht.

6. Schienenanordnung (3) nach einem der Ansprüche 1 bis 5,
**dadurch gekennzeichnet, dass**
die erste Montageschiene (8) und die zweite Montageschiene (9) jeweils Mittel zur Erhöhung der mechanischen Steifigkeit aufweisen, beispielsweise:
- eine oder mehrere entlang der Längserstreckung der Montageschiene (8, 9) ausgebildete Umkantungen (24), Verstrebungen und/oder Materialverstärkungen; und/oder
- einen Materialverbund aus zumindest zwei Grundmaterialien.

7. Schienenanordnung (3) nach einem der Ansprüche 1 bis 6,
**gekennzeichnet durch**
wenigstens eine Verbindungseinrichtung (25), um die erste Montageschiene (8) oder die zweite Montageschiene (9) mit zumindest einer benachbarten, weiteren Montageschiene (9, 8) einer weiteren Schienenanordnung (3) mechanisch zu verbinden.

8. Schienenanordnung (3) nach Anspruch 7,
**dadurch gekennzeichnet, dass**
die Verbindungseinrichtung (25) wenigstens ein unmittelbar an den zu verbindenden benachbarten Montageschienen (8, 9) befestigbares Verbindungsmittel (28) aufweist, wobei das Verbindungsmittel (28) vorzugsweise mit den jeweiligen Montageschienen (8, 9) verschraubbar, verrastbar und/oder verpressbar ist.

9. Schienenanordnung (3) nach einem der Ansprüche 2 bis 8,
**dadurch gekennzeichnet, dass**
die erste Montageschiene (8) und/oder die zweite Montageschiene (9) ein vorderseitiges oder rückseitiges Bewegungsbegrenzungsmittel (16) aufweist, um die Bewegung der Trägereinheit (2) entlang der Einschubrichtung (E) oder entgegen der Einschubrichtung (E) zu begrenzen, vorzugsweise elastisch zu begrenzen.

10. Schienenanordnung (3) nach Anspruch 9,
**dadurch gekennzeichnet, dass**
das Bewegungsbegrenzungsmittel (16) ausgebildet ist, die Bewegung der Trägereinheit (2) ausschließlich entlang der Einschubrichtung (E) oder entgegen der Einschubrichtung (E) zu begrenzen und in der entgegengesetzten Richtung passieren zu lassen, um eine Montagemöglichkeit für die Trägereinheit (2) bereitzustellen, vorzugsweise indem das Bewegungsbegrenzungsmittel (16) vorübergehend und zerstörungsfrei von der Trägereinheit (2) umbiegbar ist.

11. Schienenanordnung (3) nach einem der Ansprüche 1 bis 10,
**dadurch gekennzeichnet, dass**
der Befestigungspunkt (10) der ersten Montageschiene (8) und/oder der zweiten Montageschiene (9) an einem Endabschnitt der jeweiligen Montageschiene (8, 9) angeordnet und vorzugsweise als Langlochbohrung ausgebildet ist.

12. Schienenanordnung (3) nach einem der Ansprüche 1 bis 11,
**dadurch gekennzeichnet,dass**
die erste Montageschiene (8) und die zweite Montageschiene (9) denselben strukturellen Aufbau aufweisen, jedoch zueinander spiegelsymmetrisch ausgebildet und angeordnet sind.

13. Trägeranordnung (1), aufweisend eine Trägereinheit (2), insbesondere ein Rangierfeld, und eine Schienenanordnung (3) für die Trägereinheit (2) gemäß einem der Ansprüche 1 bis 12, wobei die Trägereinheit (2) zwischen den beiden Montageschienen (8, 9) aufgenommen ist.

14. Trägeranordnung (1) nach Anspruch 13,
d**adurch gekennzeichnet**, dass
zwischen zumindest einer der beiden Montageschienen (8, 9) und einer Seitenfläche (18) der Trägereinheit (2) ein Linearführungspaar ausgebildet ist, wobei vorzugsweise ein erster Verbindungspartner (19) des Linearführungspaares als Führungsnut und ein zweiter Verbindungspartner (20) des Linearführungspaares als korrespondierender Nutenstein ausgebildet ist.

15. Trägeranordnung (1) nach Anspruch 13 oder 14,
**dadurch gekennzeichnet, dass**
zwischen zumindest einer der beiden Montageschienen (8, 9) und einer Seitenfläche (18) der Trägereinheit (2) eine Fixierungsanordnung (21) ausgebildet ist, um die Trägereinheit (2) entlang oder entgegen der Einschubrichtung (E) in zumindest einer Auszugsposition und/oder in einer Betriebsposition zu fixieren.

16. Faseroptisches Verteilersystem (31), aufweisend einen Verteilerrahmen (11) und mehrere Trägeranordnungen (1) gemäß einem der Ansprüche 13 bis 15, die in dem Verteilerrahmen (11) befestigt sind, vorzugsweise in verschiedenen Höhenlagen (H) befestigt sind.
